# EUROPEAN PATENT APPLICATION

(11) **EP 4 576 812 A1**
(43) Date of publication of application: **25.06.2025**
(21) Application number: 23899552.6
(22) Date of filing: 22.09.2023
(51) Int. Cl.: H04Q 11/00, H04B 10/25

(54) **INFORMATION GENERATION METHOD AND RELATED APPARATUS**

(30) Priority: 06.12.2022 CN 202211559570
(71) Applicant: Huawei Technologies Co., Ltd., Shenzhen, Guangdong 518129 (CN)
(72) Inventor: ZHENG, Gang, Shenzhen, Guangdong 518129 (CN); ZHENG, Zongzhao, Shenzhen, Guangdong 518129 (CN); LI, Borui, Shenzhen, Guangdong 518129 (CN)
(74) Representative: Grünecker Patent- und Rechtsanwälte PartG mbB
(86) International application number: PCT/CN2023/120660
(87) International publication number: WO 2024/119969

(57) **Abstract**

This application discloses an information generation method and a related apparatus, so that a topology relationship between a primary gateway device, at least one secondary gateway device, and at least one optical splitter is visualized, to facilitate system operations and maintenance. The method provided in this application includes: The primary gateway device obtains connection information and level information. The connection information includes a connection relationship between the at least one secondary gateway device and an optical splitter port of the at least one optical splitter. The level information indicates a cascading level corresponding to each of the at least one optical splitter. The primary gateway device generates topology information based on the connection information and the level information. The topology information includes a connection relationship between the primary gateway device, the at least one secondary gateway device, and the at least one optical splitter and the connection relationship between the at least one secondary gateway device and the optical splitter port of the at least one optical splitter.

## Description

This application claims priority to Chinese Patent Application No. 202211559570.5, filed with the China National Intellectual Property Administration on December 6, 2022 and entitled "INFORMATION GENERATION METHOD AND RELATED APPARATUS", which is incorporated herein by reference in its entirety.

### TECHNICAL FIELD

This application relates to the field of optical communication technologies, and in particular, to an information generation method and a related apparatus.

### BACKGROUND

With the popularization of fixed access broadband, various intelligent terminals and various emerging network services, for example, a 4K or 8K high-definition video, an augmented reality (augmented reality, AR) service or a virtual reality (virtual reality, VR) service, an interactive game, a home cloud, remote online education, an online teleconference, and telemedicine, begin to emerge and become an indispensable part in daily life of people. These network services provide great convenience for work and life of the public, and enrich recreation and entertainment life of people. To improve network service experience, users have higher requirements on network quality (for example, a bandwidth, a delay, or reliability). To resolve a wireless fidelity (wireless fidelity, Wi-Fi) coverage problem of a home network, a fiber to the room (fiber to the room, FTTR) technology is proposed and has attracted wide attention. In the FTTR technology, the main point is that an optical fiber is further extended to a residential room and a Wi-Fi access device is installed in the room. In this way, a distance between a terminal device of a user and the Wi-Fi device is reduced, and quality of Wi-Fi signals is ensured.

Currently, an FTTR network includes a primary gateway device, at least one secondary gateway device, and at least one optical splitter. The optical splitter is a device configured to connect the primary gateway device and the at least one secondary gateway device. The optical splitter has a multi-level optical splitting capability, and is configured to provide optical signals and power inputs for the secondary gateway device. However, a topology relationship between the primary gateway device, the at least one secondary gateway device, and the at least one optical splitter is information that needs to be obtained urgently for system operations and maintenance. Therefore, how to meet a requirement of visualizing the topology relationship between the primary gateway device, the at least one secondary gateway device, and the at least one optical splitter is an urgent problem to be resolved.

### SUMMARY

This application provides an information generation method and a related apparatus, used by a primary gateway device to determine topology information. Therefore, a topology relationship between the primary gateway device, at least one secondary gateway device, and at least one optical splitter is visualized, to facilitate system operations and maintenance.

A first aspect of this application provides an information generation method. The method is applied to an optical communication system. The optical communication system includes a primary gateway device, at least one secondary gateway device, and at least one optical splitter. The primary gateway device is connected to the at least one optical splitter in a cascaded manner. The method includes: The primary gateway device obtains connection information and level information. The connection information includes a connection relationship between the at least one secondary gateway device and an optical splitter port of the at least one optical splitter. The level information indicates a cascading level corresponding to each of the at least one optical splitter. The primary gateway device generates topology information based on the connection information and the level information. The topology information includes a connection relationship between the primary gateway device, the at least one secondary gateway device, and the at least one optical splitter and the connection relationship between the at least one secondary gateway device and the optical splitter port of the at least one optical splitter.

It can be learned from the foregoing technical solution that the primary gateway device may obtain the connection information and the level information, and determine the topology information based on the connection information and the level information. Therefore, a topology relationship between the primary gateway device, the at least one secondary gateway device, and the at least one optical splitter is visualized, to facilitate operations and maintenance of the optical communication system.

Based on the first aspect, in a possible implementation, the connection information includes a correspondence between each of the at least one secondary gateway device and an optical splitter port number.

In this implementation, the connection relationship between the at least one secondary gateway device and the optical splitter port may be represented using the correspondence between the secondary gateway device and the optical splitter port number. Therefore, determining of the connection relationship between the at least one secondary gateway device and the optical splitter port of the at least one optical splitter by the primary gateway device is facilitated.

Based on the first aspect, in a possible implementation, the level information includes a receive optical power or round-trip time (round-trip time, RTT) of each of the at least one secondary gateway device or a distance between the secondary gateway device and the primary gateway device. The receive optical power of the secondary gateway device is a receive optical power of the secondary gateway device for receiving an optical signal sent by the primary gateway device. The RTT of the secondary gateway device is time required for the optical signal to pass from the primary gateway device to the secondary gateway device and then pass from the secondary gateway device to the primary gateway device. The receive optical power or the RTT of the secondary gateway device indicates the cascading level corresponding to the optical splitter connected to the secondary gateway device.

In this implementation, a possible implementation of the level information is provided. The cascading level corresponding to the optical splitter connected to each secondary gateway device is indirectly indicated using the receive optical power or the RTT of each secondary gateway device or the distance between the secondary gateway device and the primary gateway device. Therefore, determining of the connection relationship between the primary gateway device, the at least one secondary gateway device, and the at least one optical splitter is facilitated.

Based on the first aspect, in a possible implementation, the at least one secondary gateway device includes a first secondary gateway device. That the primary gateway device obtains connection information and level information includes: The primary gateway device receives a connection relationship between the first secondary gateway device and the optical splitter port from the first secondary gateway device, and receives a receive optical power, RTT, or a distance between the first secondary gateway device and the primary gateway device from the first secondary gateway device.

In this implementation, the primary gateway device may obtain the connection information and the level information from the at least one secondary gateway device, to facilitate determining of the topology information by the primary gateway device. Therefore, the topology relationship between the primary gateway device, the at least one secondary gateway device, and the at least one optical splitter is visualized, to facilitate operations and maintenance of the optical communication system.

Based on the first aspect, in a possible implementation, the connection relationship between the first secondary gateway device and the optical splitter port is carried in an optical network unit management and control interface (ONU management and control interface, OMCI) message, an operations, administration, and maintenance (operations, administration, and maintenance, OAM) message, or an Ethernet packet. The receive optical power or the RTT of the first secondary gateway device or the distance between the first secondary gateway device and the primary gateway device is carried in the OMCI message, the OAM message, or the Ethernet packet.

In this implementation, some possible messages that carry the connection relationship between the first secondary gateway device and the optical splitter port are shown, and some possible messages that carry the receive optical power or the RTT of the first secondary gateway device or the distance between the first secondary gateway device and the primary gateway device are shown. There is no need to redefine a new message, which facilitates implementation.

Based on the first aspect, in a possible implementation, before that the primary gateway device receives a connection relationship between the first secondary gateway device and the optical splitter port from the first secondary gateway device, the method further includes: The primary gateway device sends a first request to the first secondary gateway device. The first request is used to request the connection relationship between the first secondary gateway device and the optical splitter port.

In this implementation, the primary gateway device may actively request the first secondary gateway device to report the connection relationship between the first secondary gateway device and the optical splitter port. In this way, the determining of the topology information by the primary gateway device is facilitated.

Based on the first aspect, in a possible implementation, before that the primary gateway device receives a receive optical power or RTT from the first secondary gateway device, the method further includes: The primary gateway device sends a second request to the first secondary gateway device. The second request is used to request the receive optical power or the RTT of the first secondary gateway device or the distance between the first secondary gateway device and the primary gateway device. In this implementation, the primary gateway device may actively request the first secondary gateway device to report the receive optical power or the RTT of the first secondary gateway device or the distance between the first secondary gateway device and the primary gateway device. In this way, the determining of the topology information by the primary gateway device is facilitated.

Based on the first aspect, in a possible implementation, the level information includes upper-level device information and lower-level device information that are of each of the at least one optical splitter. In this implementation, another implementation of the level information is shown, to facilitate determining of the connection relationship between the primary gateway device and the at least one optical splitter by the primary gateway device.

Based on the first aspect, in a possible implementation, that the primary gateway device obtains connection information and level information includes the following step:

The primary gateway device receives the connection information and the level information from a first-level optical splitter of the at least one optical splitter. In this implementation, the primary gateway device may obtain the connection information and the level information from the first-level optical splitter, to quickly and efficiently obtain the connection information and the level information. This facilitates the determining of the topology information by the primary gateway device.

Based on the first aspect, in a possible implementation, the connection information and the level information are carried in a communication electrical signal. In this implementation, the connection information and the level information may be carried in the communication electrical signal. In this way, communication transmission between the primary gateway device and the first-level optical splitter is implemented.

Based on the first aspect, in a possible implementation, before that the primary gateway device receives the connection information and the level information from a first-level optical splitter of the at least one optical splitter, the method further includes: The primary gateway device sends a third request to the first-level optical splitter. The third request is used to request the connection information and the level information. In this implementation, the primary gateway device may actively request the connection information and the level information from the first-level optical splitter, to facilitate the determining of the topology information by the primary gateway device.

Based on the first aspect, in a possible implementation, that the primary gateway device obtains connection information and level information includes: The primary gateway device receives the connection relationship between the optical splitter port of each of the at least one optical splitter and the secondary gateway device, the upper-level device information of the optical splitter, and the lower-level device information of the optical splitter. In this implementation, the primary gateway device may obtain the connection relationship between the optical splitter port of each optical splitter and the secondary gateway device, the upper-level device information of the optical splitter, and the lower-level device information of the optical splitter from each optical splitter, to facilitate the determining of the topology information by the primary gateway device.

Based on the first aspect, in a possible implementation, the connection information and the level information are carried in a wireless communication signal or a communication optical signal. In this way, communication transmission between the primary gateway device and each optical splitter is implemented.

A second aspect of this application provides an information generation method. The method is applied to an optical communication system. The optical communication system includes a primary gateway device, at least one secondary gateway device, and at least one optical splitter. The primary gateway device is connected to the at least one optical splitter in a cascaded manner. The at least one secondary gateway device includes a first secondary gateway device. The method includes: The first secondary gateway device sends a connection relationship between the first secondary gateway device and an optical splitter port and a receive optical power or round-trip time RTT of the first secondary gateway device or a distance between the first secondary gateway device and the primary gateway device to the primary gateway device. The receive optical power of the first secondary gateway device is a receive optical power of the first secondary gateway device for receiving an optical signal sent by the primary gateway device. The RTT of the first secondary gateway device is time required for the optical signal to pass from the primary gateway device to the first secondary gateway device and then pass from the first secondary gateway device to the primary gateway device. The receive optical power or the RTT of the first secondary gateway device or the distance between the first secondary gateway device and the primary gateway device indicates a cascading level corresponding to an optical splitter connected to the first secondary gateway device.

In the foregoing technical solution, the first secondary gateway device may report the connection relationship between the first secondary gateway device and the optical splitter port and the receive optical power or the round-trip time RTT of the first secondary gateway device or the distance between the first secondary gateway device and the primary gateway device to the primary gateway device. In this way, determining of topology information by the primary gateway device is implemented. A topology relationship between the primary gateway device, the at least one secondary gateway device, and the at least one optical splitter is visualized, to facilitate operations and maintenance of the optical communication system.

Based on the second aspect, in a possible implementation, before that the first secondary gateway device sends a connection relationship between the first secondary gateway device and an optical splitter port to the primary gateway device, the method further includes: The first secondary gateway device receives a first request from the primary gateway device. The first request is used to request the connection relationship between the first secondary gateway device and the optical splitter port.

In this implementation, the first secondary gateway device may receive the first request of the primary gateway device, to report the connection relationship between the first secondary gateway device and the optical splitter port to the primary gateway device. In this way, the determining of the topology information by the primary gateway device is facilitated.

Based on the second aspect, in a possible implementation, before that the first secondary gateway device sends a receive optical power or RTT of the first secondary gateway device or a distance between the first secondary gateway device and the primary gateway device, the method further includes:

The first secondary gateway device receives a second request from the primary gateway device. The second request is used to request the receive optical power or the RTT of the first secondary gateway device or the distance between the first secondary gateway device and the primary gateway device.

In this implementation, the first secondary gateway device may receive the second request of the primary gateway device, to report the receive optical power or the RTT of the first secondary gateway device or the distance between the first secondary gateway device and the primary gateway device to the primary gateway device. In this way, the determining of the topology information by the primary gateway device is facilitated.

Based on the second aspect, in a possible implementation, the connection relationship between the first secondary gateway device and the optical splitter port includes a correspondence between the first secondary gateway device and an optical splitter port number. In this implementation, the connection relationship between the first secondary gateway device and the optical splitter port may be represented using the correspondence between the first secondary gateway device and the optical splitter port number. Therefore, determining of the connection relationship between the first secondary gateway device and the optical splitter port by the primary gateway device is facilitated.

Based on the second aspect, in a possible implementation, the connection relationship between the first secondary gateway device and the optical splitter port is carried in an OMCI message, an OAM message, or an Ethernet packet. The receive optical power or the RTT of the first secondary gateway device or the distance between the first secondary gateway device and the primary gateway device is carried in the OMCI message, the OAM message, or the Ethernet packet.

In this implementation, some possible messages that carry the connection relationship between the first secondary gateway device and the optical splitter port are shown, and some possible messages that carry the receive optical power or the RTT of the first secondary gateway device or the distance between the first secondary gateway device and the primary gateway device are shown. There is no need to redefine a new message, which facilitates implementation.

A third aspect of this application provides an information generation method. The method is applied to an optical communication system. The optical communication system includes a primary gateway device, at least one secondary gateway device, and at least one optical splitter. The primary gateway device is connected to the at least one optical splitter in a cascaded manner. The at least one optical splitter includes a first-level optical splitter. The method includes: The first-level optical splitter obtains connection information and level information. The connection information includes a connection relationship between the at least one secondary gateway device and an optical splitter port of the at least one optical splitter. The level information indicates a cascading level corresponding to each of the at least one optical splitter. The first-level optical splitter sends the connection information and the level information to the primary gateway device.

In the foregoing technical solution, the first-level optical splitter may report the connection information and the level information to the primary gateway device. In this way, determining of topology information by the primary gateway device is implemented. A topology relationship between the primary gateway device, the at least one secondary gateway device, and the at least one optical splitter is visualized, to facilitate operations and maintenance of the optical communication system.

Based on the third aspect, in a possible implementation, the level information includes upper-level device information and lower-level device information that are of each of the at least one optical splitter. In this implementation, another implementation of the level information is shown, to facilitate determining of a connection relationship between the primary gateway device and the at least one optical splitter by the primary gateway device.

Based on the third aspect, in a possible implementation, the at least one optical splitter further includes a second-level optical splitter. That the first-level optical splitter obtains connection information and level information includes: The first-level optical splitter receives first information from the second-level optical splitter. The first information includes a connection relationship between an optical splitter port of each of the at least one optical splitter except the first-level optical splitter and the secondary gateway device, and the upper-level device information and the lower-level device information that are of each optical splitter. In this implementation, the first-level optical splitter may obtain the first information from the second-level optical splitter, so that the first-level optical splitter obtains the connection information and the level information, and sends the connection information and the level information to the primary gateway device.

Based on the third aspect, in a possible implementation, the connection information and the level information are carried in a communication electrical signal. In this implementation, the connection information and the level information may be carried in the communication electrical signal. In this way, communication transmission between the primary gateway device and the first-level optical splitter is implemented.

A fourth aspect of this application provides an information generation method. The method is applied to an optical communication system, the optical communication system includes a primary gateway device, at least one secondary gateway device, and at least one optical splitter. The primary gateway device is connected to the at least one optical splitter in a cascaded manner. The at least one optical splitter includes M levels of optical splitters, and M is an integer greater than or equal to 2. The method includes: An N^{th}-level optical splitter obtains second information. The second information includes a connection relationship between an optical splitter port of each of the N^{th}-level optical splitter in the M levels of optical splitters to a M^{th}-level optical splitter in the M levels of optical splitters and the secondary gateway device, and upper-level device information and lower-level device information that are of each of the N^{th}-level optical splitter to the M^{th}-level optical splitter. N is an integer greater than or equal to 2 and less than or equal to M. The N^{th}-level optical splitter sends the second information to an (N-1)^{th}-level optical splitter.

In the foregoing technical solution, the N^{th}-level optical splitter may send the second information to the (N-1)^{th}-level optical splitter, so that the first-level optical splitter collects a connection relationship between each optical splitter and the secondary gateway device, and upper-level device information and lower-level device information that are of each optical splitter. Therefore, determining of topology information by the primary gateway device is implemented. A topology relationship between the primary gateway device, the at least one secondary gateway device, and the at least one optical splitter is visualized, to facilitate operations and maintenance of the optical communication system.

Based on the fourth aspect, in a possible implementation, the second information is carried in a communication electrical signal. In this implementation, communication transmission between optical splitters of different levels is implemented, and transmission of the second information is implemented.

Based on the fourth aspect, in a possible implementation, that an N^{th}-level optical splitter obtains second information includes: The N^{th}-level optical splitter receives third information from an (N+1)^{th}-level optical splitter. The third information includes a connection relationship between an optical splitter port of each of the (N+1)^{th}-level optical splitter in the M levels of optical splitters to the M^{th}-level optical splitter in the M levels of optical splitters and the secondary gateway device, and upper-level device information and lower-level device information that are of each of the (N+1)^{th}-level optical splitter to the M^{th}-level optical splitter.

Based on the fourth aspect, in a possible implementation, the third information is carried in a communication electrical signal. In this implementation, communication transmission between optical splitters of different levels is implemented, and transmission of the third information is implemented.

A fifth aspect of this application provides a primary gateway device. The primary gateway device is applied to an optical communication system. The optical communication system includes the primary gateway device, at least one secondary gateway device, and at least one optical splitter. The primary gateway device is connected to the at least one optical splitter in a cascaded manner. The primary gateway device includes an obtaining module and a generation module. The obtaining module is configured to obtain connection information and level information. The connection information includes a connection relationship between the at least one secondary gateway device and an optical splitter port of the at least one optical splitter. The level information indicates a cascading level corresponding to each of the at least one optical splitter. The generation module is configured to generate topology information based on the connection information and the level information. The topology information includes a connection relationship between the primary gateway device, the at least one secondary gateway device, and the at least one optical splitter and the connection relationship between the at least one secondary gateway device and the optical splitter port of the at least one optical splitter.

Based on the fifth aspect, in a possible implementation, the connection information includes a correspondence between each of the at least one secondary gateway device and an optical splitter port number.

Based on the fifth aspect, in a possible implementation, the level information includes a receive optical power or RTT of each of the at least one secondary gateway device or a distance between the secondary gateway device and the primary gateway device. The receive optical power of the secondary gateway device is a receive optical power of the secondary gateway device for receiving an optical signal sent by the primary gateway device. The RTT of the secondary gateway device is time required for the optical signal to pass from the primary gateway device to the secondary gateway device and then pass from the secondary gateway device to the primary gateway device. The receive optical power or the RTT of the secondary gateway device indicates the cascading level corresponding to the optical splitter connected to the secondary gateway device.

Based on the fifth aspect, in a possible implementation, the at least one secondary gateway device includes a first secondary gateway device. The obtaining module is specifically configured to: receive a connection relationship between the first secondary gateway device and the optical splitter port from the first secondary gateway device, and receive a receive optical power, RTT, or a distance between the first secondary gateway device and the primary gateway device from the first secondary gateway device.

Based on the fifth aspect, in a possible implementation, the connection relationship between the first secondary gateway device and the optical splitter port is carried in an OMCI message, an OAM message, or an Ethernet packet. The receive optical power or the RTT of the first secondary gateway device or the distance between the first secondary gateway device and the primary gateway device is carried in the OMCI message, the OAM message, or the Ethernet packet.

Based on the fifth aspect, in a possible implementation, the primary gateway device further includes a sending module. The sending module is configured to send a first request to the first secondary gateway device. The first request is used to request the connection relationship between the first secondary gateway device and the optical splitter port.

Based on the fifth aspect, in a possible implementation, the primary gateway device further includes the sending module. The sending module is configured to send a second request to the first secondary gateway device. The second request is used to request the receive optical power or the RTT of the first secondary gateway device or the distance between the first secondary gateway device and the primary gateway device.

Based on the fifth aspect, in a possible implementation, the level information includes upper-level device information and lower-level device information that are of each of the at least one optical splitter.

Based on the fifth aspect, in a possible implementation, the obtaining module is specifically configured to receive the connection information and the level information from a first-level optical splitter of the at least one optical splitter.

Based on the fifth aspect, in a possible implementation, the connection information and the level information are carried in a communication electrical signal.

Based on the fifth aspect, in a possible implementation, the primary gateway device further includes the sending module. The sending module is configured to send a third request to the first-level optical splitter. The third request is used to request the connection information and the level information.

Based on the fifth aspect, in a possible implementation, the obtaining module is specifically configured to receive a connection relationship between an optical splitter port of each of the at least one optical splitter and the secondary gateway device, the upper-level device information of the optical splitter, and the lower-level device information of the optical splitter.

Based on the fifth aspect, in a possible implementation, the connection information and the level information are carried in a wireless communication signal or a communication optical signal.

A sixth aspect of this application provides a first secondary gateway device. The first secondary gateway device is applied to an optical communication system. The optical communication system includes a primary gateway device, at least one secondary gateway device, and at least one optical splitter. The primary gateway device is connected to the at least one optical splitter in a cascaded manner. The at least one secondary gateway device includes the first secondary gateway device. The first secondary gateway device includes a sending module. The sending module is configured to send a connection relationship between the first secondary gateway device and an optical splitter port and a receive optical power or round-trip time RTT of the first secondary gateway device or a distance between the first secondary gateway device and the primary gateway device to the primary gateway device. The receive optical power of the first secondary gateway device is a receive optical power of the first secondary gateway device for receiving an optical signal sent by the primary gateway device. The RTT of the first secondary gateway device is time required for the optical signal to pass from the primary gateway device to the first secondary gateway device and then pass from the first secondary gateway device to the primary gateway device. The receive optical power or the RTT of the first secondary gateway device or the distance between the first secondary gateway device and the primary gateway device indicates a cascading level corresponding to an optical splitter connected to the first secondary gateway device.

Based on the sixth aspect, in a possible implementation, the first secondary gateway device further includes a receiving module. The receiving module is configured to receive a first request from the primary gateway device. The first request is used to request the connection relationship between the first secondary gateway device and the optical splitter port.

Based on the sixth aspect, in a possible implementation, the first secondary gateway device further includes the receiving module.

The receiving module receives a second request from the primary gateway device. The second request is used to request the receive optical power or the RTT of the first secondary gateway device or the distance between the first secondary gateway device and the primary gateway device.

Based on the sixth aspect, in a possible implementation, the connection relationship between the first secondary gateway device and the optical splitter port includes a correspondence between the first secondary gateway device and an optical splitter port number.

Based on the sixth aspect, in a possible implementation, the connection relationship between the first secondary gateway device and the optical splitter port is carried in an OMCI message, an OAM message, or an Ethernet packet. The receive optical power or the RTT of the first secondary gateway device or the distance between the first secondary gateway device and the primary gateway device is carried in the OMCI message, the OAM message, or the Ethernet packet.

A seventh aspect of this application provides a first-level optical splitter. The first-level optical splitter is applied to an optical communication system. The optical communication system includes a primary gateway device, at least one secondary gateway device, and at least one optical splitter. The primary gateway device is connected to the at least one optical splitter in a cascaded manner. The at least one optical splitter includes the first-level optical splitter. The first-level optical splitter includes an obtaining module and a sending module. The obtaining module is configured to obtain connection information and level information. The connection information includes a connection relationship between the at least one secondary gateway device and an optical splitter port of the at least one optical splitter. The level information indicates a cascading level corresponding to each of the at least one optical splitter. The sending module is configured to send the connection information and the level information to the primary gateway device.

Based on the seventh aspect, in a possible implementation, the level information includes upper-level device information and lower-level device information that are of each of the at least one optical splitter.

Based on the seventh aspect, in a possible implementation, the at least one optical splitter further includes a second-level optical splitter. The obtaining module is specifically configured to receive first information from the second-level optical splitter. The first information includes a connection relationship between an optical splitter port of each of the at least one optical splitter except the first-level optical splitter and the secondary gateway device, and the upper-level device information and the lower-level device information that are of each optical splitter.

Based on the seventh aspect, in a possible implementation, the connection information and the level information are carried in a communication electrical signal.

An eighth aspect of this application provides an N^{th}-level optical splitter. The N^{th}-level optical splitter is applied to an optical communication system. The optical communication system includes a primary gateway device, at least one secondary gateway device, and at least one optical splitter. The primary gateway device is connected to the at least one optical splitter in a cascaded manner. The at least one optical splitter includes M levels of optical splitters, and M is an integer greater than or equal to 2. The N^{th}-level optical splitter includes an obtaining module and a sending module. The obtaining module is configured to obtain second information. The second information includes a connection relationship between an optical splitter port of each of the N^{th}-level optical splitter in the M levels of optical splitters to a M^{th}-level optical splitter in the M levels of optical splitters and the secondary gateway device, and upper-level device information and lower-level device information that are of each of the N^{th}-level optical splitter to the M^{th}-level optical splitter. N is an integer greater than or equal to 2 and less than or equal to M. The sending module is configured to send the second information to an (N-1)^{th}-level optical splitter.

Based on the eighth aspect, in a possible implementation, the second information is carried in a communication electrical signal.

Based on the eighth aspect, in a possible implementation, the obtaining module is specifically configured to receive third information from an (N+1)^{th}-level optical splitter. The third information includes a connection relationship between an optical splitter port of each of the (N+1)^{th}-level optical splitter in the M levels of optical splitters to the M^{th}-level optical splitter in the M levels of optical splitters and the secondary gateway device, and upper-level device information and lower-level device information that are of each of the (N+1)^{th}-level optical splitter to the M^{th}-level optical splitter.

Based on the eighth aspect, in a possible implementation, the third information is carried in a communication electrical signal.

A ninth aspect of this application provides an optical communication apparatus, including a processor and a transceiver. The processor and the transceiver are connected to each other through a line. The processor is configured to perform any implementation of the first aspect, the second aspect, the third aspect, or the fourth aspect.

Optionally, the processor is configured to invoke and run a computer program stored in a memory, to enable the processor to implement any implementation of the first aspect, the second aspect, the third aspect, or the fourth aspect.

Optionally, the processor is configured to control the transceiver to receive and send a signal.

Optionally, the optical communication apparatus further includes the memory. The memory stores the computer program.

A tenth aspect of this application provides an optical communication system. The optical communication system includes a primary gateway device and a first secondary gateway device. The primary gateway device is configured to perform the method according to a corresponding implementation in the first aspect, and the first secondary gateway device is configured to perform the method according to any implementation of the second aspect.

Alternatively, the optical communication system includes a primary gateway device and a first-level optical splitter. The primary gateway device is configured to perform the method according to a corresponding implementation in the first aspect, and the first-level optical splitter is configured to perform the method according to any implementation of the third aspect. Optionally, the optical communication system further includes an N^{th}-level optical splitter, and the N^{th}-level optical splitter is configured to perform the method according to any implementation of the fourth aspect.

An eleventh aspect of this application provides a processing chip. The processing chip includes a processor. The processor is configured to invoke computer instructions or a computer program stored in a memory, to perform the method according to any one of the first aspect to the fourth aspect.

Based on the eleventh aspect, in a possible implementation, the processing chip further includes the memory. The memory and the processor are interconnected through a line.

A twelfth aspect of this application provides a computer-readable storage medium, including instructions. When the instructions are run on a computer, the computer is enabled to perform the method according to any one of the first aspect to the fourth aspect.

A thirteenth aspect of this application provides a computer program product including instructions. When the computer program product runs on a computer, the computer is enabled to perform the method according to any one of the first aspect to the fourth aspect.

According to the foregoing technical solutions, it can be learned that embodiments of this application have the following advantages:

It can be learned from the foregoing technical solutions that the method provided in this application is applied to an optical communication system. The optical communication system includes a primary gateway device, at least one secondary gateway device, and at least one optical splitter. The primary gateway device is connected to the at least one optical splitter in a cascaded manner. The primary gateway device obtains connection information and level information. The connection information includes a connection relationship between the at least one secondary gateway device and an optical splitter port of the at least one optical splitter. The level information indicates a cascading level corresponding to each of the at least one optical splitter. Then, the primary gateway device generates topology information based on the connection information and the level information. The topology information includes a connection relationship between the primary gateway device, the at least one secondary gateway device, and the at least one optical splitter and the connection relationship between the at least one secondary gateway device and the optical splitter port of the at least one optical splitter. It can be learned that the primary gateway device may obtain the connection information and the level information, and determine the topology information based on the connection information and the level information. Therefore, a topology relationship between the primary gateway device, the at least one secondary gateway device, and the at least one optical splitter is visualized, to facilitate operations and maintenance of the optical communication system.

### BRIEF DESCRIPTION OF DRAWINGS

FIG. 1 is a schematic diagram of a communication system applied in an embodiment of this application;
FIG. 2 is a schematic diagram of a structure of an FTTR network according to an embodiment of this application;
FIG. 3 is a schematic diagram of another structure of an FTTR network applied in an embodiment of this application;
FIG. 4 is a schematic diagram of a first structure of a primary gateway device according to an embodiment of this application;
FIG. 5 is a schematic diagram of a structure of an active optical splitter according to an embodiment of this application;
FIG. 6 is a schematic diagram of a first embodiment of an information generation method according to an embodiment of this application;
FIG. 7 is a schematic diagram of a second embodiment of an information generation method according to an embodiment of this application;
FIG. 8 is a schematic diagram of a third embodiment of an information generation method according to an embodiment of this application;
FIG. 9 is a schematic diagram of a second structure of a primary gateway device according to an embodiment of this application;
FIG. 10 is a schematic diagram of another structure of an active optical splitter according to an embodiment of this application;
FIG. 11 is a schematic diagram of a third structure of a primary gateway device according to an embodiment of this application;
FIG. 12 is a schematic diagram of a structure of a first secondary gateway device according to an embodiment of this application;
FIG. 13 is a schematic diagram of a structure of an optical splitter according to an embodiment of this application; and
FIG. 14 is a schematic diagram of a structure of an optical communication apparatus according to an embodiment of this application.

### DESCRIPTION OF EMBODIMENTS

This application provides an information generation method and a related apparatus, used by a primary gateway device to determine topology information. Therefore, a topology relationship between the primary gateway device, at least one secondary gateway device, and at least one optical splitter is visualized, to facilitate system operations and maintenance.

The following clearly and completely describes the technical solutions in embodiments of this application with reference to the accompanying drawings in embodiments of this application. It is clear that the described embodiments are merely some but not all of embodiments of this application. Based on embodiments of this application, all other embodiments obtained by a person skilled in the art without creative efforts fall within the protection scope of this application.

Reference to "an embodiment", "some embodiments", or the like described in this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean reference to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized in another manner.

In descriptions of this application, unless otherwise specified, "/" means "or". For example, A/B may represent A or B. A term "and/or" in this specification describes only an association relationship between associated objects and indicates that there may be three relationships. For example, A and/or B may represent the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c each may be singular or plural.

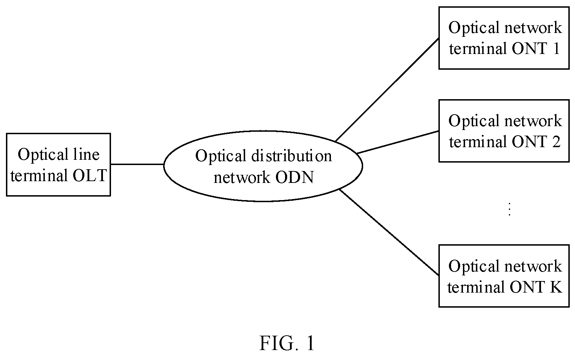

FIG. 1 is a schematic diagram of a communication system applied in an embodiment of this application. With reference to FIG. 1, this application is mainly applied to a passive optical network (passive optical network, PON). In an overall situation in which an optical network is fully popularized, a large quantity of communication devices need to be used. The PON network includes an optical line terminal (optical line terminal, OLT), an optical network terminal (optical network terminal, ONT), and an optical distribution network (optical distribution network, ODN) between the OLT and the ONT. The ODN network is a fiber-to-the-home optical cable network based on a PON device, and functions to provide an optical transmission channel between the OLT and the ONT.

A plurality of ONTs may be connected to a PON port of a same OLT through the ODN network. The OLT performs downstream transmission with the ONTs in a broadcast mode. The plurality of ONTs perform upstream transmission with the OLT in a time division multiplexing mode.

The technical solutions in embodiments of this application are applicable to compatibility between various passive optical network (passive optical network, PON) systems. The PON system includes, for example, a next-generation PON (next-generation PON, NG-PON), an NG-PON 1, an NG-PON 2, a gigabit-capable PON (gigabit-capable PON, GPON), a 10 gigabit per second PON (10 gigabit per second PON, XG-PON), a 10-gigabit-capable symmetric passive optical network (10-gigabit-capable symmetric passive optical network, XGS-PON), an Ethernet PON (Ethernet PON, EPON), a 10 gigabit per second EPON (10 gigabit per second EPON, 10G-EPON), a next-generation EPON (next-generation EPON, NG-EPON), a wavelength-division multiplexing (wavelength-division multiplexing, WDM) PON, a time wavelength division multiplexing (time- and wavelength-division multiplexing, TWDM) PON, a point-to-point (point-to-point, P2P) WDM PON (P2P-WDM PON), an asynchronous transfer mode PON (asynchronous transfer mode PON, APON), a broadband PON (broadband PON, BPON), and the like, as well as a 25 gigabit per second PON (25 gigabit per second PON, 25G-PON), a 50 gigabit per second PON (50 gigabit per second PON, 50G-PON), a 100 gigabit per second PON (100 gigabit per second PON, 100G-PON), a 25 gigabit per second EPON (25 gigabit per second EPON, 25G-EPON), a 50 gigabit per second EPON (50 gigabit per second EPON, 50G-EPON), a 100 gigabit per second EPON (100 gigabit per second EPON, 100G-EPON), a GPON or an EPON at another rate, and the like.

To resolve a wireless fidelity (wireless fidelity, Wi-Fi) coverage problem of a home network, an FTTR technology is proposed and has attracted wide attention. In the FTTR technology, the main point is that an optical fiber is further extended to a residential room and a Wi-Fi access device is installed in the room. In this way, a distance between a terminal device of a user and the Wi-Fi device is reduced, and quality of Wi-Fi signals is ensured.

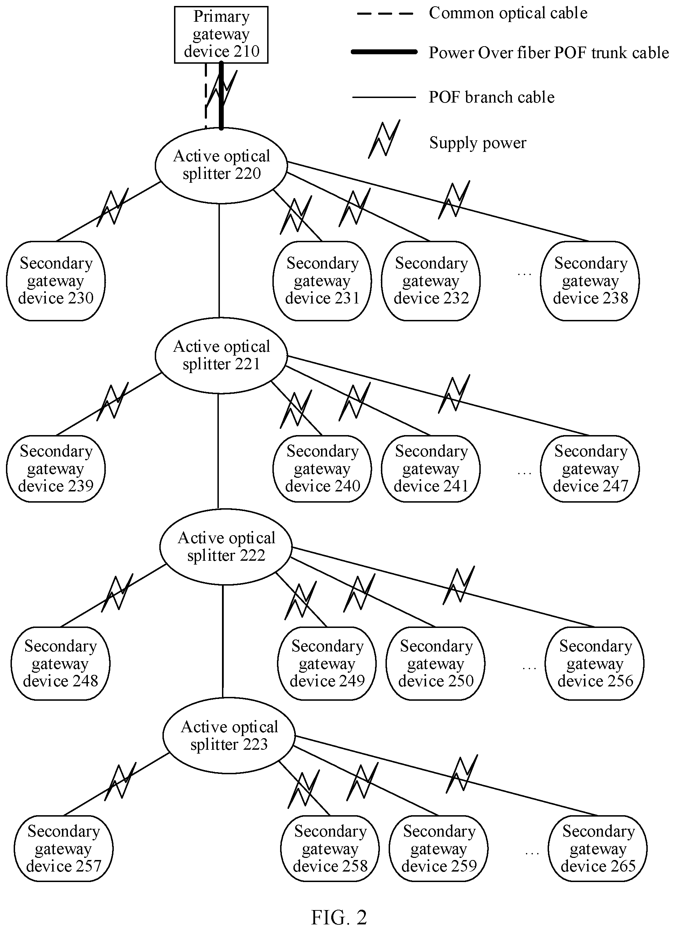

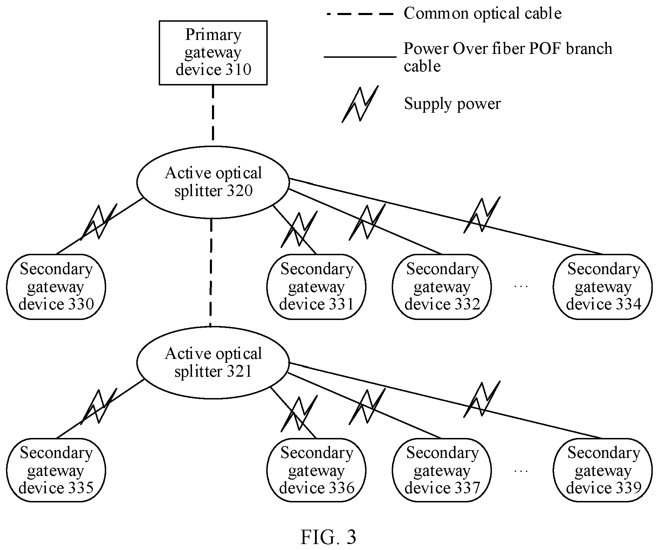

The FTTR network applied in embodiments of this application includes a primary gateway device, at least one secondary gateway device, and at least one optical splitter. The primary gateway device is connected to the at least one optical splitter in a cascaded manner. To be specific, the primary gateway device is connected to a first-level optical splitter in the at least one optical splitter, then the first-level optical splitter is connected to a second-level optical splitter in the at least one optical splitter, and by analogy, a penultimate-level optical splitter in the at least one optical splitter is connected to a last-level optical splitter in the at least one optical splitter. For example, as shown in FIG. 2, a primary gateway device 210 is connected to an active optical splitter 220. The active optical splitter 220 may be referred to as a first-level active optical splitter. The active optical splitter 220 is connected to an active optical splitter 221, and the active optical splitter 221 may be referred to as a second-level active optical splitter. The active optical splitter 221 is connected to an active optical splitter 222, and the active optical splitter 222 may be referred to as a third-level active optical splitter. The active optical splitter 222 is connected to an active optical splitter 223, and the active optical splitter 223 may be referred to as a fourth-level active optical splitter. That is, the primary gateway device 210 is connected to the active optical splitter 220 to the active optical splitter 223 in the cascaded manner. The at least one secondary gateway device is connected to an optical splitter port of the at least one optical splitter. For a specific connection manner, refer to the following structures shown in FIG. 2 and FIG. 3 for understanding.

Optionally, the primary gateway device is a device that has related functions of both an OLT and an ONT. The secondary gateway device may be the ONT. The primary gateway device and the secondary gateway device may also be referred to as FTTR devices. For example, the primary gateway device is a primary optical modem, and the secondary gateway device is a secondary optical modem.

The following describes two possible FTTR networks applied in this application.

FIG. 2 is a schematic diagram of a structure of an FTTR network applied in an embodiment of this application. With reference to FIG. 2, the FTTR network includes a primary gateway device 210, an active optical splitter 220 to an active optical splitter 223, and a secondary gateway device 230 to a secondary gateway device 265.

The primary gateway device 210 is connected to the active optical splitter 220 to the active optical splitter 223 in a cascaded manner. The active optical splitter 220 is a first-level optical splitter. An active optical splitter 221 is a second-level optical splitter. An active optical splitter 222 is a third-level optical splitter, and the active optical splitter 223 is a fourth-level optical splitter.

The primary gateway device 210 may be connected to the active optical splitter 220 through a common optical cable or a power over fiber (power over fiber, POF) trunk cable.

For example, the active optical splitter 220 is connected to the primary gateway device 210 through the common optical cable. The active optical splitter 220 may obtain power locally. In this implementation, the active optical splitter 220 is connected to the primary gateway device 210 through an optical interface. Optionally, the optical interface may be a square connector (square connector, SC) interface or a little connector (little connector, LC) interface.

For example, the active optical splitter 220 is connected to the primary gateway device 210 through the POF trunk cable. The active optical splitter 220 may be powered by the primary gateway device 210. In this implementation, the active optical splitter 220 is connected to the primary gateway device 210 through an optical/electrical composite interface. Optionally, the optical/electrical composite interface may be referred to as an any connector (any connector, XC) interface.

The active optical splitter 220 to the active optical splitter 223 are uneven active optical splitters. In other words, optical split ratios on different branch cables of each active splitter are different.

As shown in FIG. 2, a lower-level cascading interface of the active optical splitter 220 is connected to the active optical splitter 221 through a POF branch cable. Nine current-level branch ports of the active optical splitter 220 are respectively connected to the secondary gateway device 230 to the secondary gateway device 238 through POF branch cables. The active optical splitter 220 is connected to the secondary gateway device through an optical/electrical composite interface, to supply power to the secondary gateway device. A similar principle is applied to the active optical splitter 221, the active optical splitter 222, and the active optical splitter 223. Details are not described one by one herein. The current-level branch port may also be referred to as an optical splitter port.

FIG. 3 is a schematic diagram of another structure of an FTTR network applied in an embodiment of this application. With reference to FIG. 3, the FTTR network includes a primary gateway device 310, an active optical splitter 320, an active optical splitter 321, and a secondary gateway device 330 to a secondary gateway device 339.

The primary gateway device 310 is connected to the active optical splitter 320 and the active optical splitter 321 in a cascaded manner. The active optical splitter 320 is a first-level optical splitter, and the active optical splitter 321 is a second-level optical splitter.

The primary gateway device 310 and the active optical splitter 320 may be connected through a common optical cable. The active optical splitter 320 may obtain power locally. In this implementation, the active optical splitter 320 is connected to the primary gateway device 310 through an optical interface. Optionally, the optical interface may be an SC interface or an LC interface.

As shown in FIG. 3, a lower-level cascading interface of the active optical splitter 320 is connected to the active optical splitter 321 through a common optical cable. In other words, the active optical splitter 320 and the active optical splitter 321 are connected through an optical interface. Five current-level branch ports of the active optical splitter 320 are respectively connected to the secondary gateway device 330 to the secondary gateway device 334 through POF branch cables. The active optical splitter 320 is connected to the secondary gateway device through an optical/electrical composite interface, to supply power to the secondary gateway device. Optionally, the optical/electrical composite interface is an XC interface. A similar principle is applied to the active optical splitter 321. Details are not described one by one herein.

It should be noted that an FTTR network device in FIG. 2 or FIG. 3 includes at least one active optical splitter. During actual application, the FTTR network device may also include at least one passive optical splitter. Each passive optical splitter and each secondary gateway device obtains power locally.

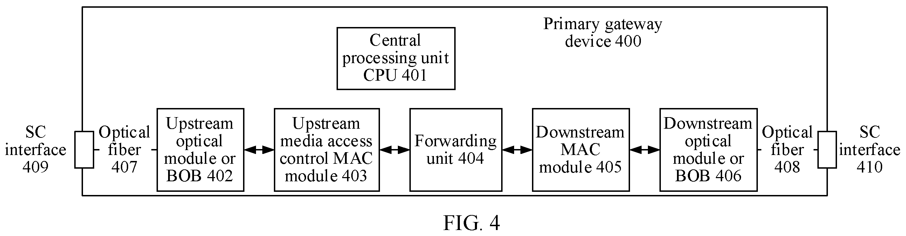

The following describes a schematic diagram of a first structure of a primary gateway device according to an embodiment of this application with reference to FIG. 4.

FIG. 4 is a schematic diagram of a structure of a primary gateway device according to an embodiment of this application. With reference to FIG. 4, a primary gateway device 400 includes a central processing unit (central processing unit, CPU) 401, an upstream optical module or a bi-directional optical sub-assembly (bi-directional optical sub-assembly, BOSA) on board (bosa on board, BOB) 402, an upstream media access control MAC module 403, a forwarding unit 404, a downstream MAC module 405, and a downstream optical module or a BOB 406.

The CPU 401 is configured to control another unit or module to process a signal and perform signal transmission. The forwarding unit 404 is configured to forward a service packet to the upstream MAC module 403 or the downstream MAC module 405.

In a possible implementation, the forwarding unit 404 sends a first service packet to the upstream MAC module. The upstream MAC module 403 performs corresponding encapsulation on the first service packet, and sends the encapsulated first service packet to the upstream optical module or the BOB 402. The encapsulated first service packet is carried in a first electrical signal. The upstream optical module or the BOB 402 is configured to perform optical-electrical conversion on the first electrical signal to obtain a first optical signal, and send the first optical signal through an optical fiber 407.

In another possible implementation, the forwarding unit 404 sends a second service packet to the downstream MAC module. The downstream MAC module 405 performs corresponding encapsulation on the second service packet, and sends the encapsulated second service packet to the downstream optical module or the BOB 406. The encapsulated second service packet is carried in a second electrical signal. The downstream optical module or the BOB 406 is configured to perform optical-electrical conversion on the second electrical signal to obtain a second optical signal, and send the second optical signal through an optical fiber 408.

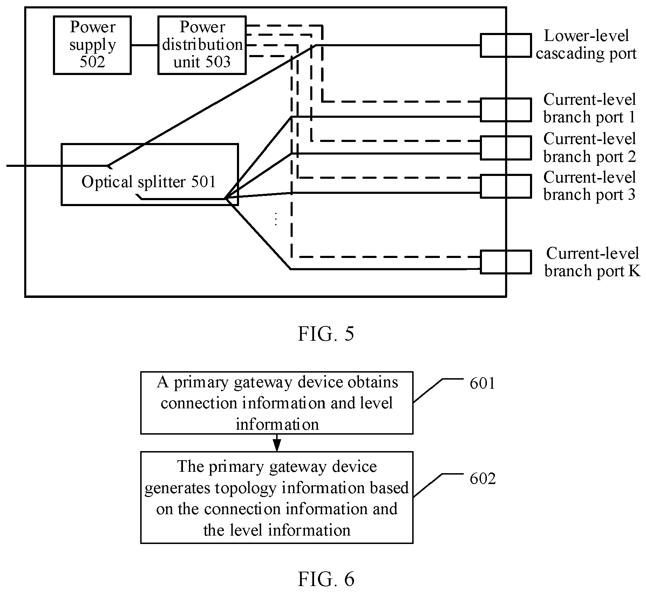

The following describes a schematic diagram of a structure of an active optical splitter according to an embodiment of this application with reference to FIG. 5.

FIG. 5 is a schematic diagram of a structure of an active optical splitter according to an embodiment of this application. With reference to FIG. 5, an active optical splitter includes an optical splitter 501, a power supply 502, and a power distribution unit 503.

The optical splitter 501 is connected to a lower-level optical splitter through a lower-level cascading port. The optical splitter 501 is separately connected to secondary gateway devices through a plurality of current-level branch ports. It should be noted that the current-level branch port may also be referred to as a port.

A first end of the power distribution unit 503 is connected to the power supply 502. A second end of the power distribution unit 503 is connected to the lower-level cascading port, to supply power to the lower-level optical splitter through the lower-level cascading port. Ends of the power distribution unit 503 other than the first end and the second end are respectively connected to the current-level branch ports, to supply power to the secondary gateway devices respectively connected to the current-level branch ports.

It should be noted that the active optical splitter shown in FIG. 5 includes the power supply 502. During actual application, the power supply 502 may not belong to the active optical splitter. This is not specifically limited in this application.

In an FTTR network, a topology relationship between a primary gateway device, at least one secondary gateway device, and at least one optical splitter is information that needs to be obtained urgently in system operations and maintenance. Therefore, how to meet a requirement of visualizing the topology relationship between the primary gateway device, the at least one secondary gateway device, and the at least one optical splitter is an urgent problem to be resolved.

This application provides corresponding technical solutions, for the primary gateway device to determine topology information. Therefore, the topology relationship between the primary gateway device, the at least one secondary gateway device, and the at least one optical splitter is visualized, to facilitate the system operations and maintenance. For details, refer to related descriptions of embodiments shown in FIG. 6, FIG. 7, and FIG. 8 below.

The following describes the technical solutions of this application with reference to specific embodiments.

FIG. 6 is a schematic diagram of a first embodiment of an information generation method according to an embodiment of this application. With reference to FIG. 6, the method is applied to an optical communication system. The optical communication system includes a primary gateway device, at least one secondary gateway device, and at least one optical splitter. The primary gateway device is connected to the at least one optical splitter in a cascaded manner. The method includes the following steps.

601: The primary gateway device obtains connection information and level information.

The connection information includes a connection relationship between the at least one secondary gateway device and an optical splitter port of the at least one optical splitter. The level information indicates a cascading level corresponding to each of the at least one optical splitter.

Optionally, the connection information includes a correspondence between the at least one secondary gateway device and an optical splitter port number. For example, the following describes the connection information with reference to FIG. 3 and Table 1. The connection information includes content shown in Table 1.

**Table 1**

| Secondary gateway device | Optical splitter port number |
|---|---|
| Secondary gateway device 330 and secondary gateway device 335 | Optical splitter port 1 |
| Secondary gateway device 331 and secondary gateway device 336 | Optical splitter port 2 |
| Secondary gateway device 332 and secondary gateway device 337 | Optical splitter port 3 |
| Secondary gateway device 333 and secondary gateway device 338 | Optical splitter port 4 |
| Secondary gateway device 334 and secondary gateway device 339 | Optical splitter port 5 |

As shown in Table 1, the connection information includes a correspondence between the secondary gateway device 330 and the optical splitter port 1 and a correspondence between the secondary gateway device 335 and the optical splitter port 1, a correspondence between the secondary gateway device 331 and the optical splitter port 2 and a correspondence between the secondary gateway device 336 and the optical splitter port 2, a correspondence between the secondary gateway device 332 and the optical splitter port 3 and a correspondence between and the secondary gateway device 337 and the optical splitter port 3, a correspondence between the secondary gateway device 333 and the optical splitter port 4 and a correspondence between the secondary gateway device 338 and the optical splitter port 4, and a correspondence between the secondary gateway device 334 and the optical splitter port 5 and a correspondence between the secondary gateway device 339 and the optical splitter port 5.

According to Table 1, because every two secondary gateway devices correspond to one optical splitter port number, it can be learned that the at least one optical splitter includes two optical splitters. In other words, a quantity of secondary gateway devices corresponding to each optical splitter port number may be represented as a quantity of optical splitters included in the at least one optical splitter.

It should be noted that, optionally, in this embodiment, the at least one optical splitter may be a passive optical splitter, or may be an active optical splitter. This is not specifically limited. The following is mainly described using an example in which the at least one optical splitter is the active optical splitter.

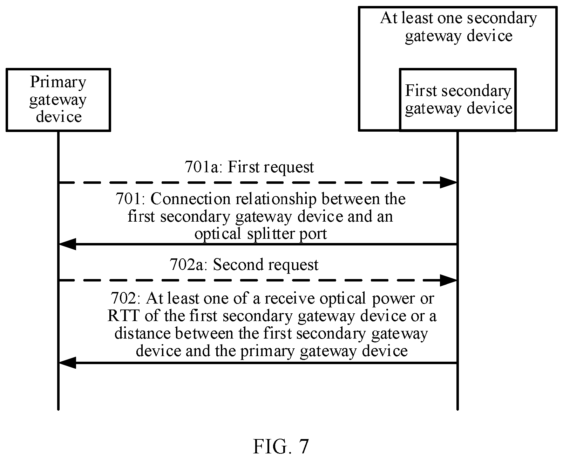

Optionally, the primary gateway device may obtain the connection information from the at least one secondary gateway device. In the embodiment shown in FIG. 7 below, an example in which the primary gateway device obtains a connection relationship between a first secondary gateway device and the optical splitter port from the first secondary gateway device in the at least one secondary gateway device is used to describe the technical solutions of this application. A similar principle is applied to a process in which the primary gateway device obtains a connection relationship between another secondary gateway device and an optical splitter port from the another secondary gateway device. Details are not described one by one herein.

Optionally, the primary gateway device may obtain the connection information from the at least one optical splitter.

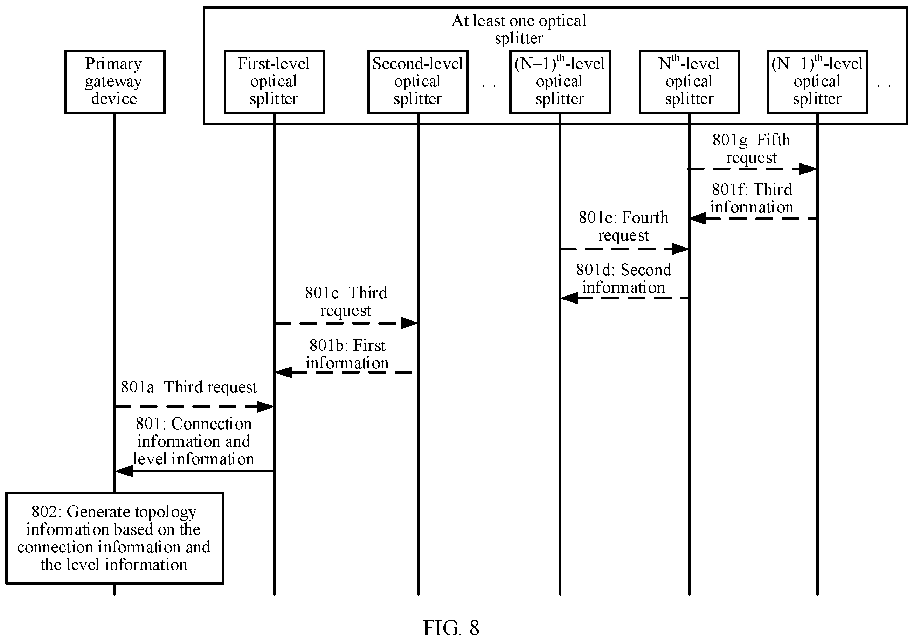

For example, the primary gateway device obtains the connection information from a first-level optical splitter in the at least one optical splitter. For details, refer to related descriptions of the embodiment shown in FIG. 8 below.

For example, the primary gateway device obtains, from each of the at least one optical splitter, a connection relationship between an optical splitter port of the optical splitter and the secondary gateway device.

Optionally, the connection information and the level information are sent simultaneously. For details, refer to an example shown in Table 4 below.

The level information indicates the cascading level corresponding to each of the at least one optical splitter, that is, indicates a level of each optical splitter. For example, as shown in FIG. 2, the primary gateway device 210 is connected to the active optical splitter 220 to the active optical splitter 223 in the cascaded manner. The active optical splitter 220 is the first-level optical splitter, the active optical splitter 221 is the second-level optical splitter, the active optical splitter 222 is the third-level optical splitter, and the active optical splitter 223 is the fourth-level optical splitter.

In a possible implementation, the level information indirectly indicates the cascading level corresponding to each of the at least one optical splitter.

In this implementation, optionally, the level information includes a receive optical power or RTT of each of the at least one secondary gateway device or a distance between the secondary gateway device and the primary gateway device.

The receive optical power of each secondary gateway device is a receive optical power of the secondary gateway device for receiving an optical signal sent by the primary gateway device. Alternatively, the receive optical power of each secondary gateway device is a receive optical power of the primary gateway device for receiving an optical signal sent by the secondary gateway device.

The RTT of each secondary gateway device is time required for the optical signal to pass from the primary gateway device to the secondary gateway device and then pass from the secondary gateway device to the primary gateway device. Therefore, the distance between each secondary gateway device and the primary gateway device is equal to a result obtained by dividing the RTT of the secondary gateway device by two and then multiplying the divided RTT by the speed of light. It should be noted that the distance between each secondary gateway device and the primary gateway device may be understood as a length of an optical fiber connecting the secondary gateway device and the primary gateway device.

The receive optical power or the RTT of each secondary gateway device or the distance between the secondary gateway device and the primary gateway device indirectly indicates the cascading level corresponding to the optical splitter connected to the secondary gateway device.

For example, with reference to the FTTR network shown in FIG. 3, the level information includes content shown in Table 2 below.

**Table 2**

| Secondary gateway device | Receive optical power |
|---|---|
| Secondary gateway device 330 | X1 |
| Secondary gateway device 335 | X2 |
| Secondary gateway device 331 | X3 |
| Secondary gateway device 336 | X4 |
| Secondary gateway device 332 | X5 |
| Secondary gateway device 337 | X6 |
| Secondary gateway device 333 | X7 |
| Secondary gateway device 338 | X8 |
| Secondary gateway device 334 | X9 |
| Secondary gateway device 339 | X10 |

With reference to Table 1 above, it can be learned that both the secondary gateway device 330 and the secondary gateway device 335 are connected to the optical splitter port 1. As shown in Table 2, a receive optical power of the secondary gateway device 330 is X1, and a receive optical power of the secondary gateway device 335 is X2. X1 is greater than X2. Therefore, it can be learned that the secondary gateway device 330 is connected to an optical splitter port 1 of the first-level active optical splitter (that is, the active optical splitter 320) in FIG. 3, and the secondary gateway device 335 is connected to an optical splitter port 1 of the second-level active optical splitter (that is, the active optical splitter 321) in FIG. 3.

Both the secondary gateway device 331 and the secondary gateway device 336 are connected to the optical splitter port 2. As shown in Table 2, a receive optical power of the secondary gateway device 331 is X3, and a receive optical power of the secondary gateway device 336 is X4. X3 is greater than X4. Therefore, it can be learned that the secondary gateway device 331 is connected to an optical splitter port 2 of the first-level active optical splitter (that is, the active optical splitter 320) in FIG. 3, and the secondary gateway device 336 is connected to an optical splitter port 2 of the second-level active optical splitter (that is, the active optical splitter 321) in FIG. 3.

Both the secondary gateway device 332 and the secondary gateway device 337 are connected to the optical splitter port 3. As shown in Table 2, a receive optical power of the secondary gateway device 332 is X5, and a receive optical power of the secondary gateway device 337 is X6. X5 is greater than X6. Therefore, it can be learned that the secondary gateway device 332 is connected to an optical splitter port 3 of the first-level active optical splitter (that is, the active optical splitter 320) in FIG. 3, and the secondary gateway device 337 is connected to an optical splitter port 3 of the second-level active optical splitter (that is, the active optical splitter 321) in FIG. 3.

Both the secondary gateway device 333 and the secondary gateway device 338 are connected to the optical splitter port 4. As shown in Table 2, a receive optical power of the secondary gateway device 333 is X7, and a receive optical power of the secondary gateway device 338 is X8. X7 is greater than X8. Therefore, it can be learned that the secondary gateway device 333 is connected to an optical splitter port 4 of the first-level active optical splitter (that is, the active optical splitter 320) in FIG. 3, and the secondary gateway device 338 is connected to an optical splitter port 4 of the second-level active optical splitter (that is, the active optical splitter 321) in FIG. 3.

Both the secondary gateway device 334 and the secondary gateway device 339 are connected to the optical splitter port 5. As shown in Table 2, a receive optical power of the secondary gateway device 334 is X9, and a receive optical power of the secondary gateway device 339 is X10. X9 is greater than X10. Therefore, it can be learned that the secondary gateway device 334 is connected to an optical splitter port 5 of the first-level active optical splitter (that is, the active optical splitter 320) in FIG. 3, and the secondary gateway device 339 is connected to an optical splitter port 5 of the second-level active optical splitter (that is, the active optical splitter 321) in FIG. 3.

For example, with reference to the FTTR network shown in FIG. 3, the level information includes content shown in Table 3 below.

**Table 3**

| Secondary gateway device | Receive optical power |
|---|---|
| Secondary gateway device 330 | RTT 1 |
| Secondary gateway device 335 | RTT 2 |
| Secondary gateway device 331 | RTT 3 |
| Secondary gateway device 336 | RTT 4 |
| Secondary gateway device 332 | RTT 5 |
| Secondary gateway device 337 | RTT 6 |
| Secondary gateway device 333 | RTT 7 |
| Secondary gateway device 338 | RTT 8 |
| Secondary gateway device 334 | RTT 9 |
| Secondary gateway device 339 | RTT 10 |

With reference to Table 1 above, it can be learned that both the secondary gateway device 330 and the secondary gateway device 335 are connected to the optical splitter port 1. As shown in Table 3, RTT of the secondary gateway device 330 is RTT 1, and RTT of the secondary gateway device 335 is RTT 2. The RTT 1 is less than the RTT 2. Therefore, it can be learned that the secondary gateway device 330 is connected to the optical splitter port 1 of the first-level active optical splitter (that is, the active optical splitter 320) in FIG. 3, and the secondary gateway device 335 is connected to the optical splitter port 1 of the second-level active optical splitter (that is, the active optical splitter 321) in FIG. 3.

Both the secondary gateway device 331 and the secondary gateway device 336 are connected to the optical splitter port 2. As shown in Table 3, RTT of the secondary gateway device 331 is RTT 3, and RTT of the secondary gateway device 336 is RTT 4. The RTT 3 is less than the RTT 4. Therefore, it can be learned that the secondary gateway device 331 is connected to the optical splitter port 2 of the first-level active optical splitter (that is, the active optical splitter 320) in FIG. 3, and the secondary gateway device 336 is connected to the optical splitter port 2 of the second-level active optical splitter (that is, the active optical splitter 321) in FIG. 3.

Both the secondary gateway device 332 and the secondary gateway device 337 are connected to the optical splitter port 3. As shown in Table 3, RTT of the secondary gateway device 332 is RTT 5, and RTT of the secondary gateway device 337 is RTT 6. The RTT 5 is less than the RTT 6. Therefore, it can be learned that the secondary gateway device 332 is connected to the optical splitter port 3 of the first-level active optical splitter (that is, the active optical splitter 320) in FIG. 3, and the secondary gateway device 337 is connected to the optical splitter port 3 of the second-level active optical splitter (that is, the active optical splitter 321) in FIG. 3.

Both the secondary gateway device 333 and the secondary gateway device 338 are connected to the optical splitter port 4. As shown in Table 3, RTT of the secondary gateway device 333 is RTT 7, and RTT of the secondary gateway device 338 is RTT 8. The RTT 7 is less than the RTT 8. Therefore, it can be learned that the secondary gateway device 333 is connected to the optical splitter port 4 of the first-level active optical splitter (that is, the active optical splitter 320) in FIG. 3, and the secondary gateway device 338 is connected to the optical splitter port 4 of the second-level active optical splitter (that is, the active optical splitter 321) in FIG. 3.

Both the secondary gateway device 334 and the secondary gateway device 339 are connected to the optical splitter port 5. As shown in Table 3, RTT of the secondary gateway device 334 is RTT 9, and RTT of the secondary gateway device 339 is RTT 10. The RTT 9 is less than the RTT 10. Therefore, it can be learned that the secondary gateway device 334 is connected to the optical splitter port 5 of the first-level active optical splitter (that is, the active optical splitter 320) in FIG. 3, and the secondary gateway device 339 is connected to the optical splitter port 5 of the second-level active optical splitter (that is, the active optical splitter 321) in FIG. 3.

It can be learned that the primary gateway device can determine, based on the receive optical power or the RTT of the secondary gateway device or the distance between the secondary gateway device and the primary gateway device, the cascading level corresponding to the optical splitter connected to the secondary gateway device.

In this implementation, optionally, the primary gateway device may obtain the level information from the at least one secondary gateway device. In the embodiment shown in FIG. 7 below, an example in which the primary gateway device obtains a receive optical power or RTT of the first secondary gateway device or a distance between the first secondary gateway device and the primary gateway device from the first secondary gateway device in the at least one secondary gateway device is used to describe the technical solutions of this application. A similar principle is applied to a process in which the primary gateway device obtains, from another secondary gateway device, a receive optical power or RTT of the another secondary gateway device or a distance between the another secondary gateway device and the primary gateway device. Details are not described one by one herein.

In another possible implementation, the level information directly indicates the cascading level corresponding to each of the at least one optical splitter.

In this implementation, optionally, the level information includes upper-level device information and lower-level device information that are of each of the at least one optical splitter.

Optionally, in this implementation, the primary gateway device may obtain the level information from the at least one optical splitter.

For example, the primary gateway device may obtain the level information from the first-level optical splitter in the at least one optical splitter. For details, refer to related descriptions of the embodiment shown in FIG. 8 below.

For example, the primary gateway device obtains, from each of the at least one optical splitter, the upper-level device information and the lower-level device information of the optical splitter.

The following shows a possible form of the connection information and the level information that are provided by the at least one optical splitter. For example, the first-level optical splitter of the at least one optical splitter may send the connection information and the level information to the primary gateway device. The connection information and the level information include content shown in Table 4.

**Table 4**

| | Upper-level device | Lower-level device | Port connection relationship |
|---|---|---|---|
| Optical splitter 1 | Primary gateway device | Optical splitter 2 | The optical splitter port 1 corresponds to a secondary gateway device 1 |
| | | | The optical splitter port 2 corresponds to a secondary gateway device 2 |
| Optical splitter 2 | Optical splitter 1 | Optical splitter 3 | The optical splitter port 1 corresponds to a secondary gateway device 3 |
| | | | The optical splitter port 2 corresponds to a secondary gateway device 4 |
| Optical splitter 3 | Optical splitter 2 | None | The optical splitter port 1 corresponds to a secondary gateway device 5 |
| | | | The optical splitter port 2 corresponds to a secondary gateway device 6 |

It can be learned from Table 4 that the optical splitter 1 is the first-level optical splitter, the optical splitter 2 is the second-level optical splitter, and the optical splitter 3 is the third-level optical splitter.

602: The primary gateway device generates topology information based on the connection information and the level information.

The topology information includes a connection relationship between the primary gateway device, the at least one secondary gateway device, and the at least one optical splitter and the connection relationship between the at least one secondary gateway device and the optical splitter port of the at least one optical splitter.

The primary gateway device may determine the connection relationship between the at least one secondary gateway device and the optical splitter port of the at least one optical splitter based on the connection information. For example, a process of the determining may refer to related descriptions of the example shown in Table 1. Details are not described herein again. The primary gateway device determines the connection relationship between the primary gateway device, the at least one secondary gateway device, and the at least one optical splitter based on the connection information and the level information.

Optionally, the level information includes the receive optical power or the round-trip time RTT of each of the at least one secondary gateway device or the distance between the secondary gateway device and the primary gateway device. The primary gateway device determines a plurality of groups of secondary gateway devices based on the connection information. Secondary gateway devices in each group of the plurality of groups of secondary gateway devices are connected to optical splitter ports with a same port number. Secondary gateway devices in different groups of secondary gateway devices are connected to optical splitter ports with different port numbers. Then, the primary gateway device determines, based on the level information, a cascading level corresponding to an optical splitter connected to each secondary gateway device in each group of secondary gateway devices. The primary gateway device determines the connection relationship between the primary gateway device, the at least one secondary gateway device, and the at least one optical splitter based on the cascading level corresponding to the optical splitter connected to each secondary gateway device. For example, the primary gateway device determines four groups of secondary gateway devices based on Table 1. A first group of secondary gateway devices includes the secondary gateway device 330 and the secondary gateway device 335. A second group of secondary gateway devices includes the secondary gateway device 331 and the secondary gateway device 336. A third group of secondary gateway devices includes the secondary gateway device 332 and the secondary gateway device 337. A fourth group of secondary gateway devices includes the secondary gateway device 333 and the secondary gateway device 338. A fifth group of secondary gateway devices includes the secondary gateway device 334 and the secondary gateway device 339. With reference to Table 2, the primary gateway device may determine that optical splitters respectively connected to the secondary gateway device 330, the secondary gateway device 331, the secondary gateway device 332, the secondary gateway device 333, and the secondary gateway device 334 are first-level optical splitters; and optical splitters respectively connected to the secondary gateway device 335, the secondary gateway device 336, the secondary gateway device 337, the secondary gateway device 338, and the secondary gateway device 339 are second-level optical splitters. The primary gateway device is connected to the first-level optical splitter, and the first-level optical splitter is connected to the second-level optical splitter. Therefore, the primary gateway device may determine the connection relationship between the primary gateway device, the at least one secondary gateway device, and the at least one optical splitter.

For example, the primary gateway device may determine, based on Table 4, that the primary gateway device is connected to the optical splitter 1, the optical splitter 1 is connected to the optical splitter 2, and the optical splitter 2 is connected to the optical splitter 3. The optical splitter 1 is connected to the secondary gateway device 1 and the secondary gateway device 2. The optical splitter 2 is connected to the secondary gateway device 3 and the secondary gateway device 4. The optical splitter 3 is connected to the secondary gateway device 5 and the secondary gateway device 6.

In this embodiment of this application, the primary gateway device obtains the connection information and the level information. The connection information includes the connection relationship between the at least one secondary gateway device and the optical splitter port of the at least one optical splitter. The level information indicates the cascading level corresponding to each of the at least one optical splitter. Then, the primary gateway device generates the topology information based on the connection information and the level information. The topology information includes the connection relationship between the primary gateway device, the at least one secondary gateway device, and the at least one optical splitter and the connection relationship between the at least one secondary gateway device and the optical splitter port of the at least one optical splitter. It can be learned that the primary gateway device may obtain the connection information and the level information, and determine the topology information based on the connection information and the level information. Therefore, a topology relationship between the primary gateway device, the at least one secondary gateway device, and the at least one optical splitter is visualized, to facilitate operations and maintenance of the optical communication system.

FIG. 7 is a schematic diagram of a second embodiment of an information generation method according to an embodiment of this application. With reference to FIG. 7, the method includes the following steps.

701: A first secondary gateway device sends a connection relationship between the first secondary gateway device and an optical splitter port to a primary gateway device. Correspondingly, the primary gateway device receives the connection relationship between the first secondary gateway device and the optical splitter port from the first secondary gateway device.

Optionally, the connection relationship between the first secondary gateway device and the optical splitter port includes a correspondence between the first secondary gateway device and an optical splitter port number. For example, as shown in Table 1, the first secondary gateway device is the secondary gateway device 330, and the secondary gateway device 330 sends a correspondence between the secondary gateway device 330 and an optical splitter port 1 to the primary gateway device.

Optionally, the connection relationship between the first secondary gateway device and the optical splitter port may be carried in a communication optical signal, a wireless communication signal, or an Ethernet packet. This is not specifically limited in this application.

For an implementation in which the connection relationship between the first secondary gateway device and the optical splitter port is carried in the communication optical signal or the Ethernet packet, separate structures of the primary gateway device and the first secondary gateway device do not need to be improved.

For an implementation in which the connection relationship between the first secondary gateway device and the optical splitter port is carried in the wireless communication signal, a corresponding receive antenna should be integrated on the primary gateway device, and the primary gateway device receives the wireless communication signal through the receive antenna; and a corresponding transmit antenna should be integrated on the first secondary gateway device, and the first secondary gateway device sends the wireless communication signal through the transmit antenna.

Optionally, the connection relationship between the first secondary gateway device and the optical splitter port is carried in an OMCI message or an OEM message.

For example, when a GPON standard is used between the primary gateway device and the first secondary gateway device, the primary gateway device and the first secondary gateway device may perform transmission of the connection relationship between the first secondary gateway device and the optical splitter port by using the OMCI message. A possible format of the OMCI message is described below. Refer to Table 5.

**Table 5**

| Managed entity name (Managed entity Name) | Optical splitter port relation (splitter port relation) |
|---|---|
| Managed entity class value (Managed entity class value) | Xxx (where a length occupies two bytes) |
| Managed entity ID (Managed Entity id) | Each instance of the management entity provides a unique number. If there is only one instance, the number is 0x0000 (where a length occupies two bytes). |
| Optical splitter port (splitter port) | Optical splitter port number (where a length occupies one byte) |

For example, when an EPON standard is used between the primary gateway device and the first secondary gateway device, the primary gateway device and the first secondary gateway device may perform transmission of the connection relationship between the first secondary gateway device and the optical splitter port by using the OEM message. A possible format of the OEM message is described below. Refer to Table 6.

**Table 6**

| Octets (bytes) | Packet format | Remarks |
|---|---|---|
| 6 | DA = 01-80-C2-00-00-02 | Destination address (Destination address, DA) |
| 6 | SA | Source address (Source Address, SA) |
| 2 | Length/Type = 0x8809 | Length/Type (Length/Type) |
| 1 | Subtype = 0x03 | Subtype (Subtype) |
| 2 | Flags | Flag (flags) |
| 1 | Code = 0xFE | Code (Code) |
| 3 | OUI | Organizationally unique identifier (organizationally unique identifier, OUI) |
| 1 | Ext.Opecod = 0x03 | Extended operation code (Extended opcode) |
| 1 | Branch = 0xXX | Branch (Branch) |
| 2 | Leaf = 0xXX | Leaf (leaf) |
| 1 | Variable Width = 1 | Variable width (Variable Width) |
| 1 | Optical splitter port (splitter port) | Optical splitter port number |
| 33 | Padding | Padding (Padding) |
| 4 | FCS | Frame check sequence (frame check sequence, FCS) |

Optionally, the embodiment shown in FIG. 7 further includes step 701a. Step 701a may be performed before step 701.

701a: The primary gateway device sends a first request to the first secondary gateway device. Correspondingly, the first secondary gateway device receives the first request from the primary gateway device.

The first request is used to request the connection relationship between the first secondary gateway device and the optical splitter port.

In this implementation, the primary gateway device may actively request the connection relationship between the first secondary gateway device and the optical splitter port from the first secondary gateway device.

Optionally, the first request may be carried in a communication optical signal, a wireless communication signal, or an Ethernet packet. This is not specifically limited in this application.

702: The first secondary gateway device sends at least one of a receive optical power or RTT of the first secondary gateway device or a distance between the first secondary gateway device and the primary gateway device to the primary gateway device.

The at least one of the receive optical power or the RTT of the first secondary gateway device or a distance between the first secondary gateway device and the primary gateway device may be carried in an optical signal, a wireless signal, or an Ethernet packet. This is not specifically limited in this application. For different carrying manners, for requirements on improvement of structures of the primary gateway device and the first secondary gateway device, refer to the foregoing related descriptions.

Optionally, the at least one of the receive optical power or the RTT of the first secondary gateway device or the distance between the first secondary gateway device and the primary gateway device may be carried in an OMCI message or an OEM message.

Optionally, the embodiment shown in FIG. 7 further includes step 702a. Step 702a may be performed before step 702.

702a: The primary gateway device sends a second request to the first secondary gateway device. Correspondingly, the first secondary gateway device receives the second request from the primary gateway device.

The second request is used to request the at least one of the receive optical power or the RTT of the first secondary gateway device or the distance between the first secondary gateway device and the primary gateway device.

Optionally, the second request may be carried in a communication optical signal, a wireless communication signal, or an Ethernet packet. This is not specifically limited in this application.

It should be noted that there is no fixed execution sequence between step 702a and step 701a. Step 702a may be performed first, and then step 701a is performed. Alternatively, step 701a is performed first, and then step 702a is performed. Alternatively, step 702a and step 701a are simultaneously performed based on a situation. This is not specifically limited in this application.

Optionally, when step 702a and step 701a are performed simultaneously, the first request and the second request may be a same request.

It can be learned from the embodiment shown in FIG. 7 that the primary gateway device may obtain the connection relationship between the first secondary gateway device and the optical splitter port and the at least one of the receive optical power or the RTT of the first secondary gateway device or the distance between the first secondary gateway device and the primary gateway device from the first secondary gateway device. For another secondary gateway device, the primary gateway device obtains a connection relationship between the another secondary gateway device and an optical splitter port, and at least one of a receive optical power or RTT of the another secondary gateway device or a distance between the another secondary gateway device and the primary gateway device from the another secondary gateway device by using a similar process. In this way, obtaining of topology information by the primary gateway device is implemented. The topology information includes a connection relationship between the primary gateway device, at least one secondary gateway device, and at least one optical splitter and a connection relationship between the at least one secondary gateway device and an optical splitter port of the at least one optical splitter. Therefore, a topology relationship between the primary gateway device, the at least one secondary gateway device, and the at least one optical splitter is visualized, to facilitate operations and maintenance of an optical communication system.

FIG. 8 is a schematic diagram of a third embodiment of an information generation method according to an embodiment of this application. With reference to FIG. 8, the method includes the following steps.

801: A first-level optical splitter sends connection information and level information to a primary gateway device. Correspondingly, the primary gateway device receives the connection information and the level information that are sent by the first-level optical splitter.

For the connection information and the level information, refer to the foregoing related descriptions. Details are not described herein again.

Optionally, the connection information and the level information may be carried in a communication electrical signal, a communication optical signal, or a wireless communication signal. This is not specifically limited in this application.

Optionally, when the connection information and the level information are carried in the communication electrical signal, corresponding electrical signal communication units may be integrated on the primary gateway device and each of at least one optical splitter.

The following describes possible structures of the primary gateway device and the optical splitter.

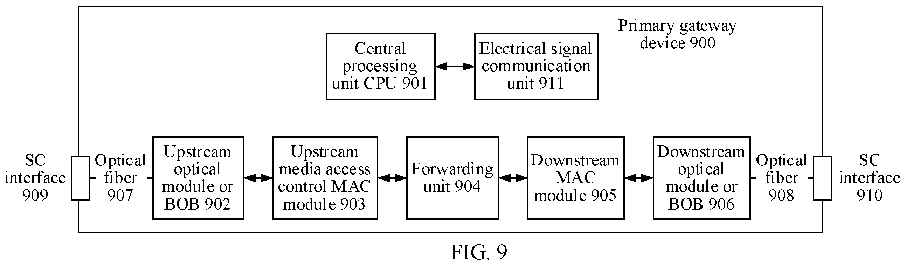

FIG. 9 is a schematic diagram of a second structure of a primary gateway device according to an embodiment of this application. With reference to FIG. 9, compared with the primary gateway device shown in FIG. 4, the primary gateway device 900 further includes an electrical signal communication unit 911. The electrical signal communication unit 911 is connected to a CPU 901. The CPU 901 may control the electrical signal communication unit 911 to send or receive a communication electrical signal. The electrical signal communication unit 911 is configured to perform transmission of the communication electrical signal with an optical splitter.

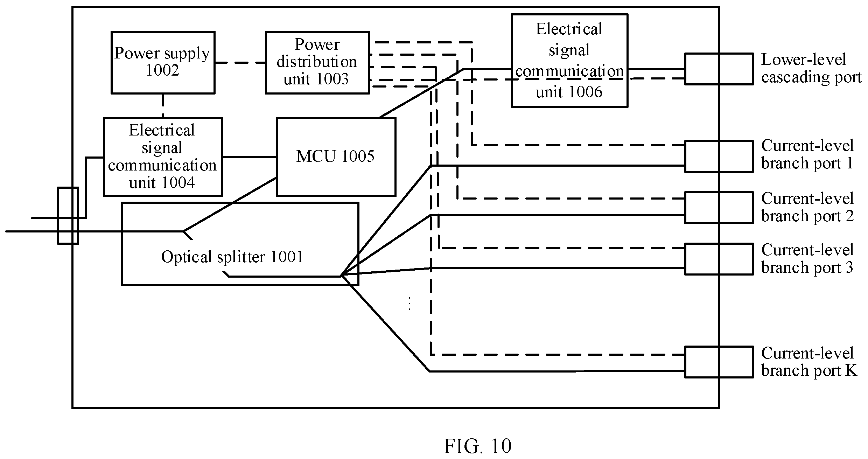

FIG. 10 is a schematic diagram of another structure of an active optical splitter according to an embodiment of this application. With reference to FIG. 10, the structure of the active optical splitter shown in FIG. 10 is similar to the structure of the active optical splitter shown in FIG. 5, and a difference lies in that the active optical splitter further includes an electrical signal communication unit 1004, a microcontroller unit (microcontroller unit, MCU) 1005, and an electrical signal communication unit 1006. The electrical signal communication unit 1004 is configured to send a communication electrical signal to an upper-level device, and the electrical signal communication unit 1006 is configured to send a communication electrical signal to a lower-level device. The MCU 1005 is configured to control the electrical signal communication unit 1004 to send the communication electrical signal, and control the electrical signal communication unit 1004 to receive a communication electrical signal.

For example, the structure shown in FIG. 10 is a schematic diagram of a structure of a first-level optical splitter. The primary gateway device 900 receives, through the electrical signal communication unit 911, the communication electrical signal sent by the electrical signal communication unit 1004 of the first-level optical splitter. The communication electrical signal carries connection information and level information.

Optionally, when the connection information and the level information are carried in a wireless communication signal, a receive antenna is integrated on the primary gateway device; and a transmit antenna is integrated on the first-level optical splitter. The first-level optical splitter sends the wireless communication signal to the primary gateway device through the transmit antenna. The wireless communication signal carries the connection information and the level information. The primary gateway device receives the wireless communication signal through the receive antenna.

Optionally, when the connection information and the level information are carried in a communication optical signal, the primary gateway device and the first-level optical splitter may be connected through an optical fiber. The communication optical signal is transmitted between the primary gateway device and the first-level optical splitter through the optical fiber.

Optionally, the embodiment shown in FIG. 8 further includes step 801a. Step 801a may be performed before step 801.

801a: The primary gateway device sends a third request to the first-level optical splitter. Correspondingly, the first-level optical splitter receives the third request from the primary gateway device.

The third request is used to request the first-level optical splitter to send the connection information and the level information to the primary gateway device.

Optionally, the third request may be carried in a communication electrical signal, a communication optical signal, or a wireless communication signal. This is not specifically limited in this application.

For example, with reference to the structures shown in FIG. 9 and FIG. 10, the primary gateway device 900 sends the third request to the first-level optical splitter through the electrical signal communication unit 911. The first-level optical splitter receives the third request through the electrical signal communication unit 1004.

Optionally, the embodiment shown in FIG. 8 further includes step 801b. Step 801b may be performed before step 801.

801b: A second-level optical splitter sends first information to the first-level optical splitter. Correspondingly, the first-level optical splitter receives the first information from the second-level optical splitter.

The first information includes a connection relationship between an optical splitter port of each of the at least one optical splitter except the first-level optical splitter and the secondary gateway device; and upper-level device information and lower-level device information that are of each optical splitter.

For example, as shown in FIG. 2, the active optical splitter 221 is the second-level optical splitter. The first information includes a connection relationship between an optical splitter port of the active optical splitter 221 and the secondary gateway device, and a connection relationship between an optical splitter port of the active optical splitter 222 and the secondary gateway device; a connection relationship between an optical splitter port of the active optical splitter 223 and the secondary gateway device; upper-level device information of the active optical splitter 221, where the active optical splitter 220 is an upper-level device of the active optical splitter 221; lower-level device information of the active optical splitter 221, where the active optical splitter 222 is a lower-level device of the active optical splitter 221; upper-level device information of the active optical splitter 222, where the active optical splitter 221 is an upper-level device of the active optical splitter 222; lower-level device information of the active optical splitter 222, where the active optical splitter 223 is a lower-level device of the active optical splitter 222; and upper-level device information of the active optical splitter 223, where the active optical splitter 222 is an upper-level device of the active optical splitter 223. Because the active optical splitter 223 is a last-level optical splitter, the first information does not include lower-level device information of the active optical splitter 223.

Optionally, the first information is carried in a communication electrical signal, a communication optical signal, or a wireless communication signal. This is not specifically limited in this application.

For example, structures respectively corresponding to the first-level optical splitter and the second-level optical splitter are similar to those in the structure shown in FIG. 10. The second-level optical splitter sends the first information to the first-level optical splitter through an electrical signal communication unit of the second-level optical splitter. Correspondingly, the first-level optical splitter receives the first information from the second-level optical splitter through an electrical signal communication unit of the first-level optical splitter.

Optionally, the embodiment shown in FIG. 8 further includes step 801c. Step 801c may be performed before step 801b.

801c: The first-level optical splitter sends the third request to the second-level optical splitter. Correspondingly, the second-level optical splitter receives the fourth request from the first-level optical splitter.

The fourth request is used to request the first information from the second-level optical splitter.

Optionally, the fourth request may be carried in a communication electrical signal, a communication optical signal, or a wireless communication signal. This is not specifically limited in this application.

For example, the separate structures of the first-level optical splitter and the second-level optical splitter are similar to those in the structure shown in FIG. 10. The first-level optical splitter sends the fourth request to the second-level optical splitter through the electrical signal communication unit of the first-level optical splitter. The second-level optical splitter receives the fourth request through the electrical signal communication unit of the second-level optical splitter.

Optionally, the at least one optical splitter includes M levels of optical splitters, where M is an integer greater than or equal to 2. The following describes an interaction process between an (N-1)^{th}-level optical splitter and an N^{th}-level optical splitter, where N is an integer greater than or equal to 2 and less than or equal to M. Optionally, the embodiment shown in FIG. 8 further includes step 801d. Step 801d may be performed before step 801b.

801d: The N^{th}-level optical splitter sends second information to the (N-1)^{th}-level optical splitter. Correspondingly, the (N-1)^{th}-level optical splitter receives the second information from the N^{th}-level optical splitter.

The second information includes a connection relationship between an optical splitter port of each of the N^{th}-level optical splitter in the M levels of optical splitters to an M^{th}-level optical splitter in the M levels of optical splitters and the secondary gateway device, and upper-level device information and lower-level device information that are of each of the N^{th}-level optical splitter to the M^{th}-level optical splitter.

For example, the N^{th}-level optical splitter is a third-level optical splitter. As shown in FIG. 2, the N^{th}-level optical splitter is the third-level optical splitter, that is, the active optical splitter 222. The second information includes the connection relationship between the optical splitter port of the active optical splitter 222 and the secondary gateway device; the upper-level device information of the active optical splitter 222, where the active optical splitter 221 is the upper-level device of the active optical splitter 222; the lower-level device information of the active optical splitter 222, where the active optical splitter 223 is the lower-level device of the active optical splitter 222; the connection relationship between the optical splitter port of the active optical splitter 223 and the secondary gateway device; and the upper-level device information of the active optical splitter 223, where the active optical splitter 222 is the upper-level device of the active optical splitter 223. Because the active optical splitter 223 is the last-level optical splitter, the second information does not include the lower-level device information of the active optical splitter 223.

Optionally, the second information is carried in a communication electrical signal, a communication optical signal, or a wireless communication signal. This is not specifically limited in this application.

For example, the (N-1)^{th}-level optical splitter is the second-level optical splitter, and the N^{th}-level optical splitter is the third-level optical splitter. Separate structures of the second-level optical splitter and the third-level optical splitter are similar to those in the structure shown in FIG. 10. The third-level optical splitter sends the second information to the second-level optical splitter through an electrical signal communication unit of the third-level optical splitter. The second-level optical splitter receives the second information from the third-level optical splitter through the electrical signal communication unit of the second optical splitter.

Optionally, the embodiment shown in FIG. 8 further includes step 801e, and step 801e may be performed before step 801d.

801e: The (N-1)^{th}-level optical splitter sends a fourth request to the N^{th}-level optical splitter. Correspondingly, the N^{th}-level optical splitter receives the fifth request from the (N-1)^{th}-level optical splitter.

The fifth request is used to request the second information.

Optionally, the fifth request may be carried in a communication electrical signal, a communication optical signal, or a wireless communication signal. This is not specifically limited in this application.

For example, separate structures of the (N-1)^{th}-level optical splitter and the Nth-level optical splitter are similar to those in the structure shown in FIG. 10. The (N-1)^{th}-level optical splitter sends the fifth request to the N^{th}-level optical splitter through the electrical signal communication unit of the (N-1)^{th}-level optical splitter. The N^{th}-level optical splitter receives the fourth request through the electrical signal communication unit of the N^{th}-level optical splitter.

Optionally, the embodiment shown in FIG. 8 further includes step 801f. Step 801f is performed before step 801d.

801f: An (N+1)^{th}-level optical splitter sends third information to the N^{th}-level optical splitter. Correspondingly, the N^{th}-level optical splitter receives the third information from the (N+1)^{th}-level optical splitter.

The third information includes a connection relationship between an optical splitter port of each of the (N+1)^{th}-level optical splitter in the M levels of optical splitters to the M^{th}-level optical splitter in the M levels of optical splitters and the secondary gateway device, and upper-level device information and lower-level device information that are of each of the (N+1)^{th}-level optical splitter to the M^{th}-level optical splitter.

Step 801f is similar to step 801d. For details, refer to the related descriptions of step 801d.

Optionally, the embodiment shown in FIG. 8 further includes step 801g. Step 801g may be performed before step 801f.

801g: The N^{th}-level optical splitter sends a fifth request to the (N+1)^{th}-level optical splitter. Correspondingly, the (N+1)^{th}-level optical splitter receives the fifth request from the N^{th}-level optical splitter.

The fifth request is used to request the third information. Step 801g is similar to step 801e. For details, refer to the related descriptions of step 801e.

It should be noted that the foregoing step 801d and step 801f each describe an interaction process between optical splitters of two adjacent levels. A similar principle is applied to an interaction process between optical splitters of any two adjacent levels in the at least one optical splitter. Details are not described one by one herein. For details, refer to the related descriptions of step 801d or step 801f.

802: The primary gateway device generates topology information based on the connection information and the level information.

Step 802 is similar to step 602 in the embodiment shown in FIG. 6. For details, refer to related descriptions of step 602 in the embodiment shown in FIG. 6.

It can be learned from the embodiment shown in FIG. 8 that the primary gateway device obtains the connection information and the level information from the at least one optical splitter. Then, the primary gateway device generates the topology information based on the connection information and the level information. The topology information includes a connection relationship between the primary gateway device, at least one secondary gateway device, and the at least one optical splitter and a connection relationship between the at least one secondary gateway device and an optical splitter port of the at least one optical splitter. Therefore, a topology relationship between the primary gateway device, the at least one secondary gateway device, and the at least one optical splitter is visualized, to facilitate operations and maintenance of an optical communication system.

It should be noted that the embodiment shown in FIG. 8 is a possible implementation. During actual application, the primary gateway device may separately receive a connection relationship between an optical splitter port of each of the at least one optical splitter and the secondary gateway device, and upper-level device information of the optical splitter and lower-level device information of the optical splitter. Optionally, communication transmission may be performed between the primary gateway device and each optical splitter by using a communication optical signal or a wireless communication signal.

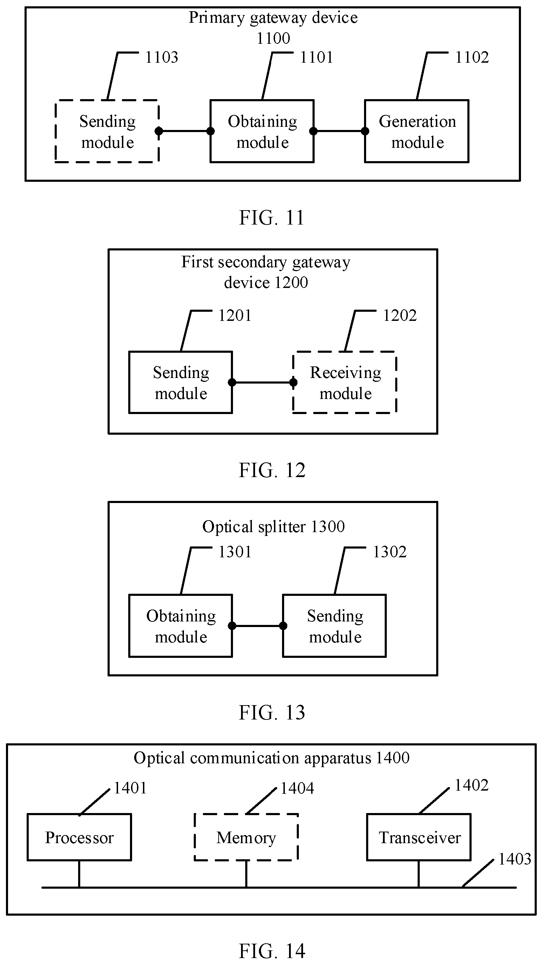

The foregoing describes the information generation method in embodiments of this application. The following describes a primary gateway device in embodiments of this application. With reference to FIG. 11, the primary gateway device 1100 includes an obtaining module 1101 and a generation module 1102. Optionally, the primary gateway device 1100 further includes a sending module 1103.

The obtaining module 1101 is configured to obtain connection information and level information. The connection information includes a connection relationship between at least one secondary gateway device and an optical splitter port of at least one optical splitter. The level information indicates a cascading level corresponding to each of the at least one optical splitter.

The generation module 1102 is configured to generate topology information based on the connection information and the level information. The topology information includes a connection relationship between the primary gateway device 1100, the at least one secondary gateway device, and the at least one optical splitter and the connection relationship between the at least one secondary gateway device and the optical splitter port of the at least one optical splitter.

In a possible implementation, the connection information includes a correspondence between each of the at least one secondary gateway device and an optical splitter port number.

In another possible implementation, the level information includes a receive optical power or RTT of each of the at least one secondary gateway device or a distance between the secondary gateway device and the primary gateway device 1100. The receive optical power of the secondary gateway device is a receive optical power of the secondary gateway device for receiving an optical signal sent by the primary gateway device 1100. The RTT of the secondary gateway device is time required for the optical signal to pass from the primary gateway device 1100 to the secondary gateway device and then pass from the secondary gateway device to the primary gateway device 1100. The receive optical power or the RTT of the secondary gateway device indicates the cascading level corresponding to the optical splitter connected to the secondary gateway device.

In another possible implementation, the at least one secondary gateway device includes a first secondary gateway device. The obtaining module 1101 is specifically configured to: receive a connection relationship between the first secondary gateway device and the optical splitter port from the first secondary gateway device, and receive a receive optical power, RTT, or a distance between the first secondary gateway device and the primary gateway device 1100 from the first secondary gateway device.

In another possible implementation, the connection relationship between the first secondary gateway device and the optical splitter port is carried in an OMCI message, an OAM message, or an Ethernet packet. The receive optical power or the RTT of the first secondary gateway device or the distance between the first secondary gateway device and the primary gateway device 1100 is carried in an OMCI message, an OAM message, or an Ethernet packet.

In another possible implementation, the sending module 1103 is configured to send a first request to the first secondary gateway device. The first request is used to request the connection relationship between the first secondary gateway device and the optical splitter port.

In another possible implementation, the sending module 1103 is configured to send a second request to the first secondary gateway device. The second request is used to request the receive optical power or the RTT of the first secondary gateway device or the distance between the first secondary gateway device and the primary gateway device 1100.

In another possible implementation, the level information includes upper-level device information and lower-level device information that are of each of the at least one optical splitter.

In another possible implementation, the obtaining module 1101 is specifically configured to receive the connection information and the level information from a first-level optical splitter of the at least one optical splitter.

In another possible implementation, the connection information and the level information are carried in a communication electrical signal.

In another possible implementation, the sending module 1103 is configured to send a third request to the first-level optical splitter. The third request is used to request the connection information and the level information.

In another possible implementation, the obtaining module 1101 is specifically configured to receive a connection relationship between an optical splitter port of each of the at least one optical splitter and the secondary gateway device, the upper-level device information of the optical splitter, and the lower-level device information of the optical splitter.

In another possible implementation, the connection information and the level information are carried in a wireless communication signal or a communication optical signal.

The following describes a first secondary gateway device in embodiments of this application. With reference to FIG. 12, the first secondary gateway device 1200 includes a sending module 1201. Optionally, the first secondary gateway device 1200 further includes a receiving module 1202.

The sending module 1201 is configured to send, to a primary gateway device, a connection relationship between the first secondary gateway device 1200 and an optical splitter port and a receive optical power or round-trip time RTT of the first secondary gateway device 1200 or a distance between the first secondary gateway device 1200 and the primary gateway device. The receive optical power of the first secondary gateway device 1200 is a receive optical power of the first secondary gateway device 1200 for receiving an optical signal sent by the primary gateway device. The RTT of the first secondary gateway device 1200 is time required for the optical signal to pass from the primary gateway device to the first secondary gateway device 1200 and then pass from the first secondary gateway device 1200 to the primary gateway device. The receive optical power or the RTT of the first secondary gateway device 1200 or the distance between the first secondary gateway device 1200 and the primary gateway device indicates a cascading level corresponding to an optical splitter connected to the first secondary gateway device 1200.

In a possible implementation, the receiving module 1202 is configured to receive a first request from the primary gateway device. The first request is used to request the connection relationship between the first secondary gateway device 1200 and the optical splitter port.

In another possible implementation, the receiving module 1202 is configured to receive a second request from the primary gateway device. The second request is used to request the receive optical power or the RTT of the first secondary gateway device 1200 or the distance between the first secondary gateway device 1200 and the primary gateway device.

In another possible implementation, the connection relationship between the first secondary gateway device 1200 and the optical splitter port includes a correspondence between the first secondary gateway device 1200 and an optical splitter port number.

In another possible implementation, the connection relationship between the first secondary gateway device 1200 and the optical splitter port is carried in an OMCI message, an OAM message, or an Ethernet packet. The receive optical power or the RTT of the first secondary gateway device 1200 or the distance between the first secondary gateway device 1200 and the primary gateway device is carried in an OMCI message, an OAM message, or an Ethernet packet.

The following describes an optical splitter in embodiments of this application. With reference to FIG. 13, the optical splitter 1300 includes an obtaining module 1301 and a sending module 1302.

In a possible implementation, the optical splitter performs the operations performed by the first-level optical splitter in the embodiment shown in FIG. 8. The details are as follows.

The obtaining module 1301 is configured to obtain connection information and level information. The connection information includes a connection relationship between at least one secondary gateway device and an optical splitter port of at least one optical splitter. The level information indicates a cascading level corresponding to each of the at least one optical splitter. The sending module 1302 is configured to send the connection information and the level information to a primary gateway device.

Optionally, the level information includes upper-level device information and lower-level device information that are of each of the at least one optical splitter.

Optionally, the at least one optical splitter further includes a second-level optical splitter. The obtaining module 1301 is specifically configured to receive first information from the second-level optical splitter. The first information includes a connection relationship between an optical splitter port of each of the at least one optical splitter except the optical splitter 1300 and the secondary gateway device, and the upper-level device information and the lower-level device information that are of each optical splitter.

Optionally, the connection information and the level information are carried in a communication electrical signal.

In another possible implementation, the optical splitter performs the operations performed by the N^{th}-level optical splitter in the embodiment shown in FIG. 8. The details are as follows.

The obtaining module 1301 is configured to obtain second information. The second information includes a connection relationship between an optical splitter port of each of the optical splitter 1300 in M levels of optical splitters to an M^{th}-level optical splitter in the M levels of optical splitters and the secondary gateway device, and upper-level device information and lower-level device information that are of each of the optical splitter 1300 to the M^{th}-level optical splitter. N is an integer greater than or equal to 2 and less than or equal to M. The sending module 1302 is configured to send the second information to an (N-1)^{th}-level optical splitter.

Optionally, the second information is carried in a communication electrical signal.

Optionally, the obtaining module 1301 is specifically configured to receive third information from an (N+1)^{th}-level optical splitter. The third information includes a connection relationship between an optical splitter port of each of the (N+1)^{th}-level optical splitter in the M levels of optical splitters to the M^{th}-level optical splitter in the M levels of optical splitters and the secondary gateway device, and upper-level device information and lower-level device information that are of each of the (N+1)^{th}-level optical splitter to the M^{th}-level optical splitter.

Optionally, the third information is carried in a communication electrical signal.

This application further provides another optical communication apparatus. FIG. 14 is a schematic diagram of a structure of an optical communication apparatus according to an embodiment of this application. The optical communication apparatus 1400 may be the primary gateway device, the first secondary gateway device, the first-level optical splitter, or the N^{th}-level optical splitter in the foregoing method embodiments.

Specifically, the optical communication apparatus 1400 shown in this embodiment includes a processor 1401 and a transceiver 1402. The processor 1401 and the transceiver 1402 are connected to each other through a line. The processor 1401 is configured to perform the operations of the method of any side in the foregoing method embodiments.

Optionally, the optical communication apparatus 1400 further includes a memory 1404.

Optionally, the processor 1401, the transceiver 1402, and the memory 1404 are separately connected to a bus 1403.

Specifically, the memory 1404 may include a computer storage medium in a form of a volatile memory and/or a non-volatile memory, such as a read-only memory and/or a random access memory. The memory 1404 may store an operating system, an application program, another program module, executable code, and program data.

The transceiver 1402 may be configured to input a command and information to the optical communication apparatus 1400, and the transceiver 1402 may be connected to the processor 1401 through the bus 1403. The transceiver 1402 may be further configured to output or input information to the optical communication apparatus 1400.

Optionally, when the processor 1401 executes the executable code or the application program stored in the memory 1404, the optical communication apparatus 1400 may perform the operations of the method of any side in the foregoing method embodiments. For a specific execution process, refer to the foregoing method embodiments. Details are not described herein again.

For example, the obtaining module 1101 and the sending module 1103 in the primary gateway device 1100 shown in FIG. 11 each may be used as the transceiver 1402 shown in FIG. 14. The generation module 1102 in the primary gateway device 1100 shown in FIG. 11 may be used as the processor 1401 shown in FIG. 14.

For example, the sending module 1201 and the receiving module 1202 in the first secondary gateway device 1200 shown in FIG. 12 each may be used as the transceiver 1402 shown in FIG. 14.

For example, the sending module 1302 in the optical splitter 1300 shown in FIG. 13 may be used as the transceiver 1402 shown in FIG. 14. The obtaining module 1301 in the optical splitter 1300 shown in FIG. 13 may be used as the processor 1401 shown in FIG. 14.

An embodiment of this application further provides an optical communication system. The optical communication system includes a primary gateway device and a first secondary gateway device. The primary gateway device is configured to perform all or some of the steps performed by the primary gateway device in the embodiments shown in FIG. 6 and FIG. 7, and the first secondary gateway device is configured to perform all or some of the steps performed by the first secondary gateway device in the embodiment shown in FIG. 7.

An embodiment of this application further provides an optical communication system. The optical communication system includes a primary gateway device, a first-level optical splitter, and an N^{th}-level optical splitter. The primary gateway device is configured to perform all or some of the steps performed by the primary gateway device in the embodiments shown in FIG. 6 and FIG. 8, the first-level optical splitter is configured to perform all or some of the steps performed by the first-level optical splitter in the embodiment shown in FIG. 8, and the N^{th}-level optical splitter is configured to perform all or some of the steps performed by the N^{th}-level optical splitter in the embodiment shown in FIG. 8.

An embodiment of this application further provides a computer program product including instructions. When the computer program product runs on a computer, the computer is enabled to perform the method in the embodiments shown in FIG. 6, FIG. 7, and FIG. 8.

An embodiment of this application further provides a computer-readable storage medium, including computer instructions. When the computer instructions are run on a computer, the computer is enabled to perform the method in the embodiments shown in FIG. 6, FIG. 7, and FIG. 8.

An embodiment of this application further provides a chip, including a processor, configured to invoke a program stored in a memory, to enable the processor to perform the method in the embodiments shown in FIG. 6, FIG. 7, and FIG. 8.

Optionally, the chip further includes the memory. The memory and the processor are interconnected through a line.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the method in the embodiments shown in FIG. 6, FIG. 7, and FIG. 8. The memory mentioned in any one of the foregoing descriptions may be a read-only memory (read-only memory, ROM), another type of static storage device capable of storing static information and instructions, a random access memory (random access memory, RAM), or the like.

It may be clearly understood by a person skilled in the art that, for the purpose of convenient and brief description, for a detailed working process of the foregoing system, apparatus, and unit, reference may be made to the corresponding process in the foregoing method embodiments, and details are not described herein again.

In the several embodiments provided in this application, it should be understood that the disclosed system, apparatus, and method may be implemented in another manner. For example, the described apparatus embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or another form.

In conclusion, the foregoing embodiments are merely intended for describing the technical solutions of this application, but not for limiting this application. Although this application is described in detail with reference to the foregoing embodiments, a person of ordinary skill in the art should understand that the technical solutions described in the foregoing embodiments may still be modified, or some technical features in the technical solutions may be equivalently replaced. These modifications or replacements do not make the essence of the corresponding technical solutions fall outside the scope of the technical solutions of embodiments of this application.

## Claims

1. An information generation method, wherein the method is applied to an optical communication system, the optical communication system comprises a primary gateway device, at least one secondary gateway device, and at least one optical splitter, and the primary gateway device is connected to the at least one optical splitter in a cascaded manner; and the method comprises:
obtaining, by the primary gateway device, connection information and level information, wherein the connection information comprises a connection relationship between the at least one secondary gateway device and an optical splitter port of the at least one optical splitter, and the level information indicates a cascading level corresponding to each of the at least one optical splitter; and
generating, by the primary gateway device, topology information based on the connection information and the level information, wherein the topology information comprises a connection relationship between the primary gateway device, the at least one secondary gateway device, and the at least one optical splitter and the connection relationship between the at least one secondary gateway device and the optical splitter port of the at least one optical splitter.

2. The method according to claim 1, wherein the connection information comprises a correspondence between each of the at least one secondary gateway device and an optical splitter port number.

3. The method according to claim 1 or 2, wherein the level information comprises a receive optical power or round-trip time RTT of each of the at least one secondary gateway device or a distance between the secondary gateway device and the primary gateway device; and
the receive optical power of the secondary gateway device is a receive optical power of the secondary gateway device for receiving an optical signal sent by the primary gateway device; and the RTT of the secondary gateway device is time required for the optical signal to pass from the primary gateway device to the secondary gateway device and then pass from the secondary gateway device to the primary gateway device, and the receive optical power or the RTT of the secondary gateway device indicates the cascading level corresponding to the optical splitter connected to the secondary gateway device.

4. The method according to claim 3, wherein the at least one secondary gateway device comprises a first secondary gateway device; and the obtaining, by the primary gateway device, connection information and level information comprises:
receiving, by the primary gateway device, a connection relationship between the first secondary gateway device and the optical splitter port from the first secondary gateway device, and receiving a receive optical power, RTT, or a distance between the first secondary gateway device and the primary gateway device from the first secondary gateway device.

5. The method according to claim 4, wherein the connection relationship between the first secondary gateway device and the optical splitter port is carried in an optical network unit management and control interface OMCI message, an operations, administration, and maintenance OAM message, or an Ethernet packet; and the receive optical power or the RTT of the first secondary gateway device or the distance between the first secondary gateway device and the primary gateway device is carried in the OMCI message, the OAM message, or the Ethernet packet.

6. The method according to claim 4 or 5, wherein before the receiving, by the primary gateway device, a connection relationship between the first secondary gateway device and the optical splitter port from the first secondary gateway device, the method further comprises:
sending, by the primary gateway device, a first request to the first secondary gateway device, wherein the first request is used to request the connection relationship between the first secondary gateway device and the optical splitter port.

7. The method according to any one of claims 4 to 6, wherein before the receiving, by the primary gateway device, a receive optical power or RTT from the first secondary gateway device, the method further comprises:
sending, by the primary gateway device, a second request to the first secondary gateway device, wherein the second request is used to request the receive optical power or the RTT of the first secondary gateway device or the distance between the first secondary gateway device and the primary gateway device.

8. The method according to claim 1 or 2, wherein the level information comprises upper-level device information and lower-level device information that are of each of the at least one optical splitter.

9. The method according to claim 8, wherein the obtaining, by the primary gateway device, connection information and level information comprises:
receiving, by the primary gateway device, the connection information and the level information from a first-level optical splitter of the at least one optical splitter.

10. The method according to claim 9, wherein the connection information and the level information are carried in a communication electrical signal.

11. The method according to claim 9 or 10, wherein before the receiving, by the primary gateway device, the connection information and the level information from a first-level optical splitter of the at least one optical splitter, the method further comprises:
sending, by the primary gateway device, a third request to the first-level optical splitter, wherein the third request is used to request the connection information and the level information.

12. An information generation method, wherein the method is applied to an optical communication system, the optical communication system comprises a primary gateway device, at least one secondary gateway device, and at least one optical splitter, the primary gateway device is connected to the at least one optical splitter in a cascaded manner, and the at least one secondary gateway device comprises a first secondary gateway device; and the method comprises:
determining, by the first secondary gateway device, a connection relationship between the first secondary gateway device and an optical splitter port and a receive optical power or round-trip time RTT of the first secondary gateway device or a distance between the first secondary gateway device and the primary gateway device, wherein the receive optical power of the first secondary gateway device is a receive optical power of the first secondary gateway device for receiving an optical signal sent by the primary gateway device; and the RTT of the first secondary gateway device is time required for the optical signal to pass from the primary gateway device to the first secondary gateway device and then pass from the first secondary gateway device to the primary gateway device, and the receive optical power or the RTT of the first secondary gateway device or the distance between the first secondary gateway device and the primary gateway device indicates a cascading level corresponding to an optical splitter connected to the first secondary gateway device; and
sending, by the first secondary gateway device, the connection relationship between the first secondary gateway device and the optical splitter port, and the receive optical power or the round-trip time RTT of the first secondary gateway device or the distance between the first secondary gateway device and the primary gateway device to the primary gateway device.

13. The method according to claim 12, wherein before the sending, by the first secondary gateway device, the connection relationship between the first secondary gateway device and the optical splitter port to the primary gateway device, the method further comprises:
receiving, by the first secondary gateway device, a first request from the primary gateway device, wherein the first request is used to request the connection relationship between the first secondary gateway device and the optical splitter port.

14. The method according to claim 12 or 13, wherein before the sending, by the first secondary gateway device, the receive optical power or the round-trip time RTT of the first secondary gateway device or the distance between the first secondary gateway device and the primary gateway device to the primary gateway device, the method further comprises:
receiving, by the first secondary gateway device, a second request from the primary gateway device, wherein the second request is used to request the receive optical power or the RTT of the first secondary gateway device or the distance between the first secondary gateway device and the primary gateway device.

15. The method according to any one of claims 12 to 14, wherein the connection relationship between the first secondary gateway device and the optical splitter port comprises a correspondence between the first secondary gateway device and an optical splitter port number.

16. The method according to any one of claims 13 to 15, wherein the connection relationship between the first secondary gateway device and the optical splitter port is carried in an optical network unit management and control interface OMCI message, an operations, administration, and maintenance OAM message, or an Ethernet packet, and the receive optical power or the RTT of the first secondary gateway device or the distance between the first secondary gateway device and the primary gateway device is carried in the OMCI message, the OAM message, or the Ethernet packet.

17. An information generation method, wherein the method is applied to an optical communication system, the optical communication system comprises a primary gateway device, at least one secondary gateway device, and at least one optical splitter, the primary gateway device is connected to the at least one optical splitter in a cascaded manner, and the at least one optical splitter comprises a first-level optical splitter; and the method comprises:
obtaining, by the first-level optical splitter, connection information and level information, wherein the connection information comprises a connection relationship between the at least one secondary gateway device and an optical splitter port of the at least one optical splitter, and the level information indicates a cascading level corresponding to each of the at least one optical splitter; and
sending, by the first-level optical splitter, the connection information and the level information to the primary gateway device.

18. The method according to claim 17, wherein the level information comprises upper-level device information and lower-level device information that are of each of the at least one optical splitter.

19. The method according to claim 17 or 18, wherein the at least one optical splitter further comprises a second-level optical splitter; and
the obtaining, by the first-level optical splitter, connection information and level information comprises:
receiving, by the first-level optical splitter, first information from the second-level optical splitter, wherein the first information comprises a connection relationship between an optical splitter port of each of the at least one optical splitter except the first-level optical splitter and the secondary gateway device, and the upper-level device information and the lower-level device information that are of each optical splitter.

20. The method according to any one of claims 17 to 19, wherein the connection information and the level information are carried in a communication electrical signal.

21. The method according to any one of claims 17 to 20, wherein before the sending, by the first-level optical splitter, the connection information and the level information to the primary gateway device, the method further comprises:
receiving, by the first-level optical splitter, a third request from the primary gateway device, wherein the third request is used to request the connection information and the level information.

22. An optical communication system, wherein the optical communication system comprises a primary gateway device and a first secondary gateway device, the primary gateway device is configured to perform the method according to any one of claims 1 to 7, and the first secondary gateway device is configured to perform the method according to any one of claims 12 to 16; or
the optical communication system comprises a primary gateway device and a first-level optical splitter, the primary gateway device is configured to perform the method according to any one of claims 1, 2, and 8 to 11, and the first-level optical splitter is configured to perform the method according to any one of claims 17 to 21.

23. An optical communication apparatus, wherein the optical communication apparatus comprises a processor and a transceiver, the processor and the transceiver are connected to each other through a line, and the processor is configured to perform the method according to any one of claims 1 to 11, or configured to perform the method according to any one of claims 12 to 16, or configured to perform the method according to any one of claims 17 to 21.

24. The optical communication apparatus according to claim 23, wherein the optical communication apparatus further comprises a memory.

25. A computer-readable storage medium, wherein the computer-readable storage medium stores a computer program; and when the computer program is executed by a communication apparatus, the communication apparatus is enabled to perform the method according to any one of claims 1 to 11, or the communication apparatus is enabled to perform the method according to any one of claims 12 to 16, or the communication apparatus is enabled to perform the method according to any one of claims 17 to 21.
